# EUROPEAN PATENT APPLICATION

(11) **EP 4 333 123 A1**
(43) Date of publication of application: **06.03.2024**
(21) Application number: 23194211.1
(22) Date of filing: 30.08.2023
(51) Int. Cl.: H01M 4/58, H01M 10/42

(54) **ALL-SOLID SECONDARY BATTERY**

(30) Priority: 31.08.2022 KR 20220110152; 05.06.2023 KR 20230072378; 28.08.2023 KR 20230113180
(71) Applicant: Samsung SDI Co., Ltd., Yongin-si, Gyeonggi-do 17084 (KR)
(72) Inventor: SON, Inhyuk, 17084 Yongin-si (KR); PARK, Kyusung, 17084 Yongin-si (KR); JO, Sungnim, 17084 Yongin-si (KR); SHIM, Kyueun, 17084 Yongin-si (KR); PARK, Taehyun, 17084 Yongin-si (KR); LEE, Jieun, 17084 Yongin-si (KR); PARK, Jinhwan, 17084 Yongin-si (KR)
(74) Representative: Marks & Clerk LLP

(57) **Abstract**

An all-solid secondary battery includes a positive electrode layer, a negative electrode layer, and a solid electrolyte layer between the positive electrode layer and the negative electrode layer, wherein the positive electrode layer includes a positive electrode current collector and a positive electrode active material layer, the positive electrode active material layer includes a lithium-containing sulfide-based positive electrode active material, the lithium-containing sulfide-based positive electrode active material includes Li₂S, a Li₂S-containing composite, or a combination thereof, the all-solid secondary battery includes a first inactive member on one surface of the positive electrode layer, the negative electrode layer includes a negative electrode current collector and a first negative electrode active material layer, a ratio of initial charge capacity of the first negative electrode active material layer to an initial charge capacity of the positive electrode active material layer is in a range of about 0.005 to about 0.45.

## Description

### BACKGROUND

### 1. Field

One or more embodiments relate to an all-solid secondary battery.

### 2. Description of Related Art

Recently, due to industry demands, batteries with relatively high energy densities and safety have been actively developed. For example, lithium batteries are being commercialized not only in the fields of information-related devices and communication devices, but also in the field of vehicles (e.g., motor vehicles). In the field of vehicles, because the vehicles are responsible for transporting people, safety is especially important.

Because lithium batteries utilize an electrolyte including a flammable organic solvent, when a short circuit occurs, there is a possibility of overheating and fire.

All-solid (e.g., solid-state) batteries utilizing a solid (e.g., solid-state) electrolyte instead of a solvent-based electrolyte has been proposed.

Because all-solid batteries do not utilize a flammable organic solvent, even when a short circuit occurs, a possibility of fire or explosion may be considerably or substantially reduced. In such all-solid batteries, safety may be considerably or substantially increased as compared to lithium batteries utilizing a solvent-based electrolyte.

### SUMMARY

A secondary battery may utilize a sulfur-based material (for example, S) as a positive electrode active material to increase capacity. During a charging/discharging process of a secondary battery, polysulfide is generated from a sulfur-based material, and the generated polysulfide moves to (toward) a negative electrode and reacts with the negative electrode. Due to such a side reaction, the lifespan characteristics of a secondary battery may be degraded. There is thus a desire and/or need for a secondary battery capable of suppressing side reactions between polysulfide and a lithium metal.

In a secondary battery including a sulfur-based material (for example, S), because a volume of the sulfur-based material is increased during initial discharging, and the volume is decreased again during a charging process, a transfer path of ions and/or electrons in an electrode may be disconnected in a process in which the volume of the sulfur-based material is increased. Such disconnection of a transfer path of ions and/or electrons causes deterioration of a secondary battery. There is thus a desire and/or need for a secondary battery capable of suppressing such disconnection of the transfer path of ions and/or electrons.

Defects may occur in a solid electrolyte layer during a manufacturing process and/or a charging/discharging process of a secondary battery, and due to such defects, cracks may occur and grow in the solid electrolyte layer. As lithium grows through such cracks, a short circuit may occur. There is thus a desire and/or need for a secondary battery capable of suppressing the occurrence of such defects during a manufacturing process and/or a charging/discharging process of a secondary battery.

Aspects of one or more embodiments of the present disclosure are directed toward a secondary battery with a new structure which prevents or reduces side reactions between an electrolyte layer and a lithium metal during charging/discharging, suppresses or reduces the discontinuation of a transfer path of ions and/or electrons, prevents or reduces side reactions caused by polysulfide during charging/discharging, and suppresses or reduces defects in a secondary battery during manufacturing and/or charging/discharging.

Additional aspects will be set forth in part in the description which follows and, in part, will be apparent from the description, or may be learned by practice of the presented embodiments of the disclosure.

According to one or more embodiments of the present disclosure, an all-solid secondary battery includes a positive electrode layer, a negative electrode layer, a solid electrolyte layer between the positive electrode layer and the negative electrode layer, and a first inactive member on one surface of the positive electrode layer, wherein the positive electrode layer includes a positive electrode current collector and a positive electrode active material layer on one surface or both (e.g., opposite) surfaces of the positive electrode current collector, the positive electrode active material layer includes a lithium-containing sulfide-based positive electrode active material, the lithium-containing sulfide-based positive electrode active material includes Li₂S, a Li₂S-containing composite, or a combination thereof, the negative electrode layer includes a negative electrode current collector and a first negative electrode active material layer on one surface of the negative electrode current collector, a ratio (B/A) of initial charge capacity (B) of the first negative electrode active material layer to initial charge capacity (A) of the positive electrode active material layer is in a range of about 0.005 to about 0.45, the initial charge capacity of the positive electrode active material layer is determined by charging from a first open circuit voltage to a maximum charging voltage vs. Li/Li⁺, and the initial charge capacity of the first negative electrode active material layer is determined by charging from a second open circuit voltage to a voltage of about 0.01 V vs. Li/Li⁺.

According to one or more embodiments of the present disclosure, an all-solid secondary battery includes a positive electrode layer, a negative electrode layer, a solid electrolyte layer between the positive electrode layer and the negative electrode layer, and a first inactive member on one surface of the positive electrode layer, wherein the positive electrode layer includes a positive electrode current collector and a positive electrode active material layer on one surface or both (e.g., opposite) surfaces of the positive electrode current collector, the positive electrode active material layer includes a lithium-containing sulfide-based positive electrode active material, the lithium-containing sulfide-based positive electrode active material includes a Li₂S-containing composite, and the negative electrode layer includes a negative electrode current collector and a first negative electrode active material layer on one surface of the negative electrode current collector.

At least some of the above and other features of the invention are set out in the claims.

### BRIEF DESCRIPTION OF THE DRAWINGS

The above and other aspects, features, and/or principles of certain embodiments of the disclosure will be more apparent from the following description taken in conjunction with the accompanying drawings, in which:
FIG. 1 is a cross-sectional view of an all-solid secondary battery according to one or more embodiments of the present disclosure;
FIG. 2 is a cross-sectional view of an all-solid secondary battery according to one or more embodiments of the present disclosure;
FIG. 3 is a cross-sectional view of a bi-cell all-solid secondary battery according to one or more embodiments of the present disclosure;
FIG. 4 is a schematic perspective view of a positive electrode layer of an all-solid secondary battery according to one or more embodiments of the present disclosure;
FIG. 5 is a schematic perspective view partially illustrating the inside of an all-solid secondary battery according to one or more embodiments of the present disclosure;
FIG. 6 is a cross-sectional view of an all-solid secondary battery according to one or more embodiments of the present disclosure;
FIG. 7 is a cross-sectional view of an all-solid secondary battery according to one or more embodiments of the present disclosure;
FIG. 8 is a cross-sectional view of a bi-cell all-solid secondary battery according to one or more embodiments of the present disclosure; and
FIG. 9 is a cross-sectional view of a stacked stack of a bi-cell all-solid secondary battery according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the spirit and scope of the present disclosure.

The illustrated embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described, by referring to the drawings, to explain aspects of the present disclosure.

As used herein, the term "and/or" includes any and all combinations of one or more of the associated listed items.

Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

It will be understood that when an element or layer is referred to as being "on," "connected to," or "coupled to" another element or layer, it can be directly on, connected to, or coupled to the other element or layer, or one or more intervening elements or layers may be present. On the other hand, when it is described that an element is "directly on" another element, another element is not interposed therebetween. In addition, it will also be understood that when an element or layer is referred to as being "between" two elements or layers, it can be the only element or layer between the two elements or layers, or one or more intervening elements or layers may also be present.

It will be understood that, although the terms "first," "second," and "third" may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section described below may be termed a second element, component, region, layer, or section without departing from the spirit and scope of the present disclosure.

The terminology used herein is for the purpose of describing particular embodiments only and is not intended to be limiting of the present disclosure. As used herein, the singular forms "a," "an," and "the," as well as "at least one," are intended to include the plural forms, unless the content clearly indicates otherwise. "At least one" should not be construed as being limited to the singular.

The terms "includes," "including," "comprises," and/or "comprising," when used in the specification, specify a presence of the stated features, regions, integers, steps, operations, elements, and/or components, but do not preclude the presence or addition of one or more other features, regions, integers, steps, operations, elements, components, and/or groups thereof.

Spatially relative terms such as "beneath," "below," "lower," "above," and "upper" may be used herein for ease of explanation to describe one element or feature's relationship to another element(s) or feature(s) as illustrated in the drawings. It will be understood that the spatially relative terms are intended to encompass different orientations of a device in use or operation in addition to the orientation illustrated in the drawings. For example, if a device in the drawings is turned over, elements described as "below" or "beneath" other elements or features would then be oriented "above" or "over" the other elements or features. Thus, the example term "below" may encompass both orientations of above and below. The device may be otherwise oriented (e.g., rotated 90 degrees or at other orientations), and the spatially relative terms used herein may be interpreted accordingly.

Unless otherwise defined, all terms (including technical and scientific terms) used herein have the same meaning as commonly understood by one of ordinary skill in the art to which the present disclosure belongs. In addition, it will be further understood that terms, such as those defined in commonly used dictionaries, should be interpreted as having a meaning that is consistent with their meaning in the context of the relevant art and/or the present disclosure, and should not be interpreted in an idealized or overly formal sense, unless expressly so defined herein.

Embodiments are described herein with reference to cross-sectional views which are schematic diagrams of idealized embodiments. As such, variations from the shapes of the illustrations as a result, for example, of manufacturing techniques and/or tolerances, are to be expected. Thus, the embodiments described herein should not be construed as limited to the particular shapes of regions illustrated herein, but may include deviations in shapes that result, for example, from manufacturing. For example, regions illustrated or described as being flat may be typically rough and/or have nonlinear features. Moreover, sharp-drawn angles may be round. Thus, regions illustrated in the drawings are schematic in nature and their shapes are not intended to illustrate the actual shape of a region and are not intended to limit the scope of the claims.

"Group" refers to a Group of the Periodic Table of the Elements according to the International Union of Pure and Applied Chemistry ("IUPAC") Groups 1-18 group classification system.

The term "particle diameter" as used herein refers to an average diameter when particles are spherical and refers to an average major axis length when particles are non-spherical. A particle diameter (or size) may be measured utilizing a particle size analyzer (PSA). A "particle diameter" is, for example, an average particle diameter. An "average particle diameter" refers to, for example, D50, which is a median particle diameter.

D50 refers to the value of the particle size corresponding to 50% from the smallest particle when the total number of particles is 100% in the distribution curve accumulated in the order of the smallest particle size to the largest particle size.

D90 refers to the value of the particle size corresponding to 90% from the smallest particle when the total number of particles is 100% in the distribution curve accumulated in the order of the smallest particle size to the largest particle size.

D10 refers to the value of the particle size corresponding to 10% from the smallest particle when the total number of particles is 100% in the distribution curve accumulated in the order of the smallest particle size to the largest particle size.

The term "metal" as used herein includes all metals and metalloids, such as silicon and germanium, in an elemental or ionic state.

The term "alloy" as used herein refers to a mixture of two or more metals.

The term "electrode active material" as used herein refers to an electrode material that may undergo lithiation and delithiation.

The term "positive electrode active material" as used herein refers to a positive electrode material that may undergo lithiation and delithiation.

The term "negative electrode active material" as used herein refers to a negative electrode material that may undergo lithiation and delithiation.

The terms "lithiate" and "lithiating" as used herein refer to a process of adding lithium to an electrode active material.

The terms "delithiate" and "delithiating" as used herein refer to a process of removing lithium from an electrode active material.

The terms "charge" and "charging" as used herein refer to a process of providing electrochemical energy to a battery.

The terms "discharge" and "discharging" as used herein refer to a process of removing electrochemical energy from a battery.

The terms "positive electrode" and "cathode" as used herein refer to an electrode at which electrochemical reduction and lithiation occur during a discharging process.

The terms "negative electrode" and "anode" as used herein refer to an electrode at which electrochemical oxidation and delithiation occur during a discharging process.

While specific embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications, variations, improvements, and substantial equivalents.

Hereinafter, an all-solid secondary battery according to embodiments of the present disclosure will be described in more detail.

### All-solid secondary battery

An all-solid secondary battery according to one or more embodiments includes a positive electrode layer, a negative electrode layer, a solid electrolyte layer disposed between the positive electrode layer and the negative electrode layer, and a first inactive member disposed on one side surface of the positive electrode layer. The positive electrode layer includes a positive electrode current collector and a positive electrode active material layer disposed on one surface or both (e.g., opposite) surfaces of the positive electrode current collector. The positive electrode active material layer includes a lithium-containing sulfide-based positive electrode active material. The lithium-containing sulfide-based positive electrode active material includes Li₂S, a Li₂S-containing composite, or a combination thereof. The negative electrode layer includes a negative electrode current collector and a first negative electrode active material layer disposed on one surface of the negative electrode current collector. A ratio (B/A) of initial charge capacity (B) of the first negative electrode active material layer to initial charge capacity (A) of the positive electrode active material layer is in a range of about 0.005 to about 0.45. The initial charge capacity of the positive electrode active material layer is determined by charging from a first open circuit voltage (OCV) to a maximum charging voltage vs. Li/Li⁺. The initial charge capacity of the negative electrode active material layer is determined by charging from a second OCV to a voltage of about 0.01 V vs. Li/Li⁺.

The all-solid secondary battery includes the lithium-containing sulfide-based positive electrode active material as a lithium source instead of a lithium metal. Thus, it is possible to omit (e.g., not provide) a lithium source such as a lithium metal from the negative electrode layer. Because a volume of the negative electrode layer is reduced, an energy density of the all-solid secondary battery is increased.

The all-solid secondary battery includes the lithium-containing sulfide-based positive electrode active material as a positive electrode active material. Accordingly, the disconnection of a transfer path of ions and/or electrons due to an increase in volume of a lithium-free sulfide-based positive electrode active material, for example, sulfur (S), during initial discharging, is prevented or reduced. The disconnection of the transfer path of ions and/or electrons is prevented or reduced, thereby improving the cycle characteristics of the all-solid secondary battery.

The all-solid secondary battery includes the first negative electrode active material layer having the initial charge capacity in a range of about 0.005 to about 0.45 with respect to the initial charge capacity of the positive electrode active material layer. Because the first negative electrode active material layer has a small initial charge capacity in such a range, the negative electrode layer may effectively compensate for a change in volume of the positive electrode layer during charging/discharging. As a result, a change in overall volume of the all-solid secondary battery is suppressed or reduced during charging/discharging. Because deterioration due to occurrence of cracks and/or the like caused by a rapid change in volume during charging/discharging of the all-solid secondary battery is prevented or reduced, a short circuit of the all-solid secondary battery is prevented or reduced and cycle characteristics are improved.

Because the all-solid secondary battery includes the solid electrolyte layer, polysulfide generated in the lithium-containing sulfide-based positive electrode active material during charging/discharging is blocked from moving to the negative electrode layer. Therefore, side reactions between the polysulfide and the negative electrode active material are suppressed or reduced.

An inactive member is disposed on one side surface of the positive electrode layer, thereby suppressing or reducing the occurrence of cracks in the solid electrolyte layer which occur during pressing and/or charging/discharging of the all-solid secondary battery. Therefore, cracks of the solid electrolyte layer are suppressed or reduced during manufacturing and/or charging/discharging of the all-solid secondary battery, thereby suppressing or reducing the advent of short circuits of the all-solid secondary battery. As a result, a short circuit of the all-solid secondary battery is prevented or reduced, and the lifespan characteristics thereof are improved.

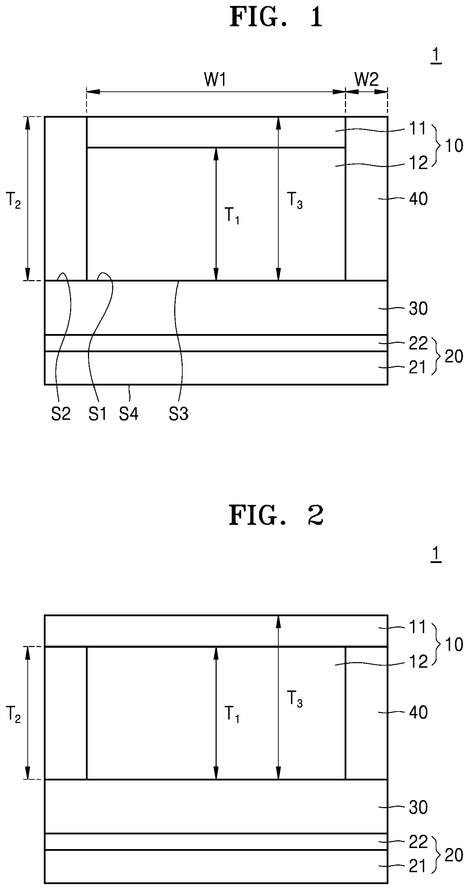

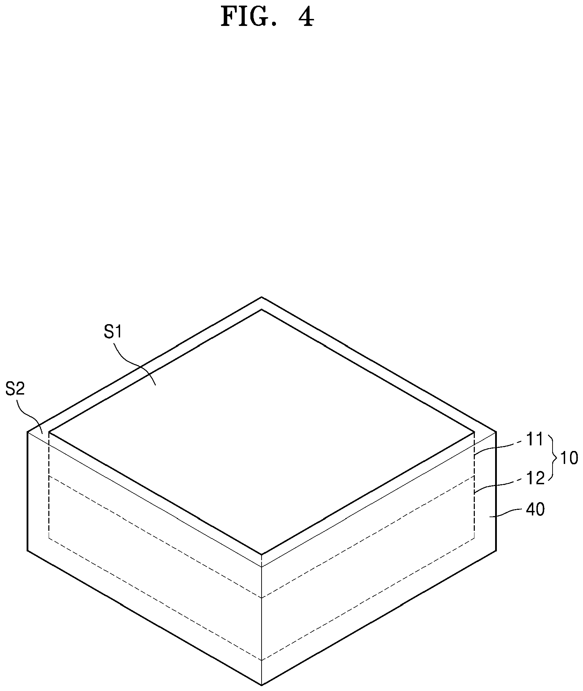

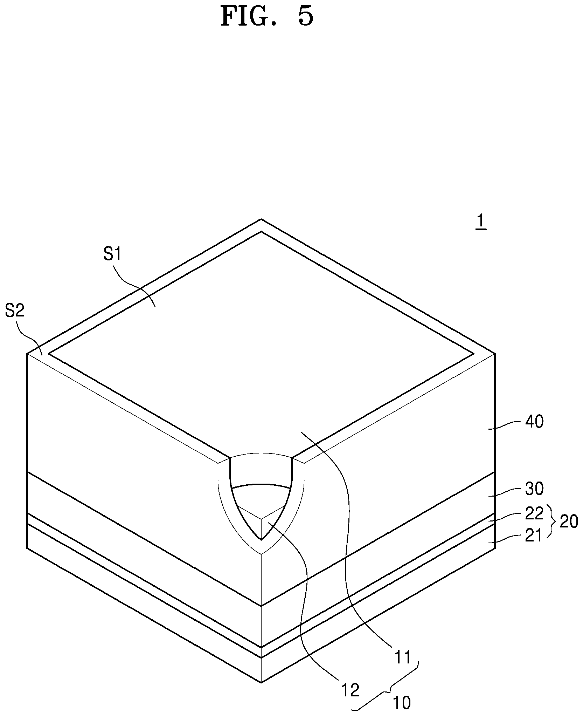

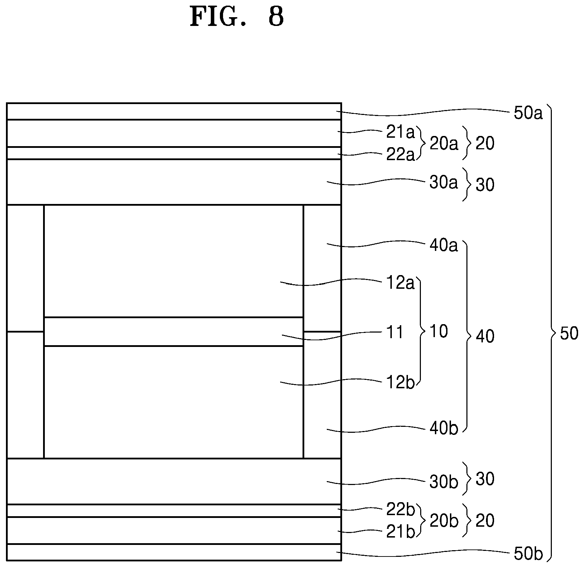

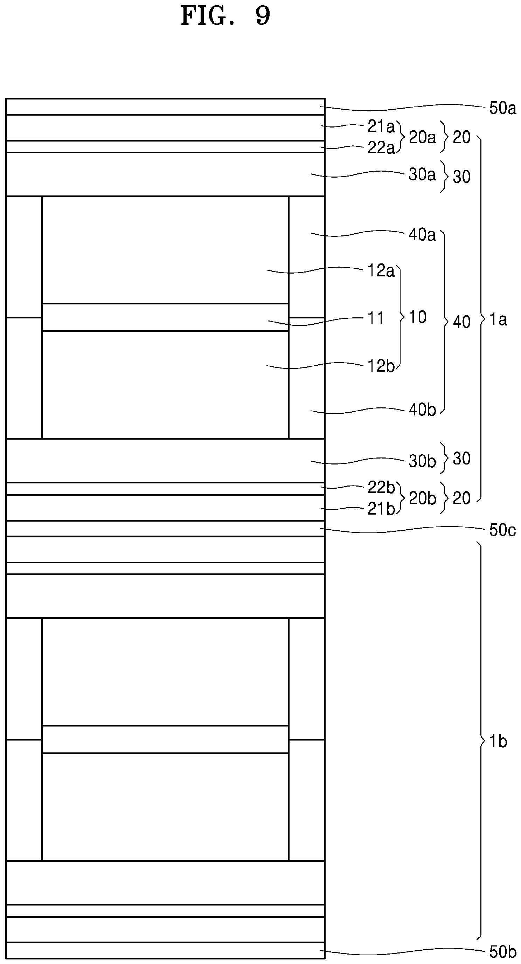

Referring to FIGS. 1 to 9, an all-solid secondary battery 1 includes a positive electrode layer 10, a negative electrode layer 20, and a solid electrolyte layer 30 disposed between the positive electrode layer 10 and the negative electrode layer 20. The positive electrode layer 10 includes a positive electrode current collector 11 and a positive electrode active material layer 12 disposed on one surface or both (e.g., opposite) surfaces of the positive electrode current collector 11. The positive electrode active material layer 12 includes a sulfide-based positive electrode active material. The sulfide-based positive electrode active material includes Li₂S, a Li₂S-containing composite, or a combination thereof. The all-solid secondary battery 1 includes a first inactive member 40 disposed on one side surface of the positive electrode layer 10 (e.g., where the one side surface may be around the positive electrode layer 10 and in one or more planes as shown, for example, in FIG. 4). The negative electrode layer 20 includes a negative electrode current collector 21 and a first negative electrode active material layer 22 disposed on one surface of the negative electrode current collector 21. A ratio (B/A) of initial charge capacity (B) of the first negative electrode active material layer 22 to initial charge capacity (A) of the positive electrode active material layer 12 is in a range of about 0.005 to about 0.45. The initial charge capacity of the positive electrode active material layer 12 is determined by charging from a first OCV to a maximum charging voltage vs. Li/Li⁺. The initial charge capacity of the negative electrode active material layer 22 is determined by charging from a second OCV to a voltage of about 0.01 V vs. Li/Li⁺. For example, a ratio (B/A) of initial charge capacity (B) of the first negative electrode active material layer 22 to initial charge capacity (A) of the positive electrode active material layer 12 may be in a range of about 0.01 to about 0.4, about 0.01 to about 0.3, about 0.01 to about 0.2 or about 0.01 to about 0.1.

### Positive electrode layer

### Positive electrode layer: positive electrode active material

Referring to FIGS. 1 to 9, the positive electrode active material layer 12 includes, for example, a positive electrode active material and a solid electrolyte. The solid electrolyte included in the positive electrode active material layer 12 is similar to or different from a solid electrolyte included in the solid electrolyte layer 30. For further details on the solid electrolyte, a section on the solid electrolyte layer 30 is referred to.

The positive electrode active material includes a lithium-containing sulfide-based positive electrode active material. The lithium-containing sulfide-based positive electrode material is, for example, an electrode material in which lithium is added to a sulfur-based positive electrode active material. A sulfur-based positive electrode active material includes, for example, a sulfur-based material, a sulfur-based material-containing composite, or a combination thereof. The sulfur-based material may be, for example, inorganic sulfur, Li₂Sₙ (wherein n>1), a disulfide compound, an organic sulfur compound, a carbon-sulfur polymer, or a combination thereof. The sulfur-based material-containing composite may be a composite including inorganic sulfur, Li₂Sₙ (wherein n>1), a disulfide compound, an organic sulfur compound, a carbon-sulfur polymer, or a combination thereof. The sulfur-based material-containing composite may include, for example, a composite of a sulfur-based material and carbon, a composite of a sulfur-based material, carbon, and a solid electrolyte, a composite of a sulfur-based material and a solid electrolyte, a composite of a sulfur-based material, carbon, and a lithium salt, a composite of a sulfur-based material and a lithium salt, a composite of a sulfur-based material and a metal carbide, a composite of a sulfur-based material, carbon, and a metal carbide, a composite of a sulfur-based material and a metal nitride, a composite of a sulfur-based material, carbon, and a metal nitride, or a combination thereof. Because a lithium-containing sulfide-based positive electrode active material provides a higher discharge capacity per unit weight than an oxide-based positive electrode active material, an energy density per unit weight of an all-solid secondary battery including the lithium-containing sulfide-based positive electrode active material may be increased.

The lithium-containing sulfide-based positive electrode active material includes, for example, Li₂S, a Li₂S-containing composite, or a combination thereof. Because the lithium-containing sulfide-based positive electrode active material includes Li₂S, a Li₂S-containing composite, or a combination thereof, which has high capacity, a lithium metal may not be provided in a case of an all-solid secondary battery is manufactured. Because a lithium metal has high reactivity and high ductility, the lithium metal may reduce mass productivity during manufacturing of a battery. Therefore, the mass productivity of an all-solid secondary battery may be improved. Because a lithium metal is not provided in a negative electrode layer, a volume of the negative electrode layer is decreased, thereby improving an energy density per unit volume of an all-solid secondary battery and constituting an all-solid secondary battery having a simpler structure.

The lithium-containing sulfide-based positive electrode active material (for example, Li₂S) undergoes delithiation, for example, during initial charging so that a volume thereof is decreased, and the lithium-containing sulfide-based positive electrode active material undergoes lithiation again during subsequent discharging so that the volume thereof is increased. Therefore, because the volume of the lithium-containing sulfide-based positive electrode active material changes in a state in which a transfer path of ions and/or electrons due to a conductive material and/or the like disposed around the lithium-containing sulfide-based positive electrode active material is maintained, there is a low possibility of the disconnection of the transfer path of ions and/or electrons. On the other hand, the sulfur-based positive electrode active material (for example, S) undergoes lithiation, for example, during initial discharging so that a volume thereof is increased, and the sulfur-based positive electrode active material undergoes delithiation again during subsequent charging so that the volume thereof is decreased. Therefore, because an initial transfer path of ions and/or electrons due to a conductive material and/or the like disposed around the sulfur-based positive electrode active material may be collapsed due to an initial volume increase of the sulfur-based positive electrode active material, a probability of the disconnection of the transfer path of ions and/or electrons is high.

A particle diameter (e.g. an average particle diameter, such as D50) of the lithium-containing sulfide-based positive electrode active material may be, for example, in a range of about 1 nm to about 50 µm, about 10 nm to about 50 µm, about 50 nm to about 40 µm, about 100 nm to about 30 µm, about 500 nm to about 30 µm, or about 1 µm to about 20 µm. Because the lithium-containing sulfide-based positive electrode active material has a particle diameter within such ranges, the cycle characteristics of an all-solid secondary battery including the lithium sulfide-based positive electrode active material may be further improved. A Li₂S-containing composite is, for example, a composite of Li₂S and a conductive material. The conductive material is, for example, an ion-conductive material, an electron-conductive material, or a combination thereof.

The electron-conductive material has an electronic conductivity of, for example, about 1.0×10³ S/m, about 1.0×10⁴ S/m, or about 1.0×10⁵ S/m or more. The electron-conductive material is, for example, in the form of a particulate electron-conductive material, a plate-like electron-conductive material, a rod-like electron-conductive material, or a combination thereof, but the present disclosure is not necessarily limited thereto. The electron-conductive material may include, for example, carbon, a metal powder, a metal compound, and/or the like. In a case of carbon is included as the electron-conductive material, because carbon has high electronic conductivity and is light, an all-solid secondary battery having a high energy density per unit mass may be implemented. The electron-conductive material may have pores. If (e.g., when) the electron-conductive material has pores, Li₂S may be included in the pores, thereby increasing a contact area between Li₂S and the electron-conductive material and increasing a specific surface area of Li₂S. A pore volume is in a range of, for example, about 0.1 cc/g to about 20.0 cc/g, about 0.5 cc/g to about 10 cc/g, or about 0.5 cc/g to about 5 cc/g. An average pore diameter is in a range of, for example, about 1 nm to about 100 nm, about 1 nm to about 50 nm, or about 1 nm to about 20 nm. A Brunauer, Emmett, and Teller (BET) specific surface area of the electron-conductive material having pores is in a range of about 200 m²/g to about 4,500 m²/g In a case of the average pore diameter is about 15 nm or less and is in a range of about 100 m²/g to about 2,500 m²/g In a case of the average pore diameter is greater than about 15 nm. A BET specific surface area, a pore diameter, a pore volume, and an average pore diameter may be obtained utilizing, for example, a nitrogen adsorption method.

The ion-conductive material has an ionic conductivity of, for example, about 1.0×10⁻⁵ S/m, about 1.0×10⁻⁴ S/m, or about 1.0×10⁻³ S/m or more. The ion-conductive material may have pores. If (e.g., when) the ion-conductive material has pores, Li₂S may be included in the pores, thereby increasing a contact area between Li₂S and the ion-conductive material and increasing a specific surface area of Li₂S. The ion-conductive material is, for example, in the form of a particulate ion-conductive material, a plate-like ion-conductive material, a rod-like ion-conductive material, or a combination thereof, but the present disclosure is not necessarily limited thereto. The ion-conductive material may be, for example, a sulfide-based solid electrolyte or an oxide-based solid electrolyte. In a case of the sulfide-based solid electrolyte is included as the ion-conductive material, the sulfide-based solid electrolyte may have high ionic conductivity and may be shaped into one or more suitable forms, thereby implementing an all-solid secondary battery having large capacity.

The Li₂S-containing composite includes, for example, a composite of Li₂S and carbon, a composite of Li₂S, carbon, and a solid electrolyte, a composite of Li₂S and a solid electrolyte, a composite of Li₂S, carbon, and a lithium salt, a composite of Li₂S and a lithium salt, a composite of Li₂S and a metal carbide, a composite of Li₂S, carbon, and a metal carbide, a composite of Li₂S and a metal nitride, a composite of Li₂S, carbon, and a metal nitride, or a combination thereof. The Li₂S-containing composite is distinguished from simple mixtures of Li₂S, and carbon, a solid electrolyte, a lithium salt, a metal carbide, a metal nitride, and/or the like. In the simple mixtures of Li₂S, and carbon, a solid electrolyte, a lithium salt, a metal carbide, a metal nitride, and/or the like, a dense interface between Li₂S and such components may not be maintained, and thus high interfacial resistance may be provided, which may reduce the lifespan characteristics of an all-solid secondary battery.

A composite of Li₂S and carbon includes carbon. As carbon, for example, any material that includes carbon atoms and is utilized as a conductive material in the art, may be utilized. Carbon may be, for example, crystalline carbon, amorphous carbon, or a combination thereof. Carbon may be, for example, a calcined product of a carbon precursor. Carbon may include, for example, carbon nanostructures. The carbon nanostructures may be, for example, one-dimensional carbon nanostructures, two-dimensional carbon nanostructures, three-dimensional carbon nanostructures, or combinations thereof. The carbon nanostructures may be, for example, carbon nanotubes (CNTs), carbon nanofibers (CNFs), carbon nanobelts, carbon nanorods, graphene, or combinations thereof. Carbon may be, for example, porous carbon or nonporous carbon. Porous carbon may have, for example, periodic and regular two-dimensional or three-dimensional pores. Porous carbon may be, for example, carbon black (CB), such as Ketjen black (KB), acetylene black (AB), Denka black, thermal black, or channel black, graphite, activated carbon, or a combination thereof. The form of the carbon may be, for example, a particle form (e.g., a form that includes a plurality of particles), a sheet form, or a flake form, but the present disclosure is not limited thereto. Any material that is utilized as carbon in the art may be utilized. A method of preparing a composite of Li₂S and carbon may be a dry method, a wet method, or a combination thereof, but the present disclosure is not limited thereto. The method of preparing a composite of Li₂S and carbon in the art may be, for example, a milling method, a heat treatment method, or a deposition method, but the present disclosure is not necessarily limited thereto, and any method utilized in the art may be utilized.

A composite of Li₂S, carbon, and a solid electrolyte includes carbon and a solid electrolyte. For carbon, the above-described composite of Li₂S and carbon is referred to. As the solid electrolyte, for example, any material utilized as an ion-conductive material in the art may be utilized. The solid electrolyte is, for example, an inorganic solid electrolyte. The solid electrolyte is, for example, a crystalline solid electrolyte, an amorphous solid electrolyte, or a combination thereof. The solid electrolyte is, for example, a sulfide-based solid electrolyte, an oxide-based solid electrolyte, or a combination thereof. The sulfide-based solid electrolyte may include, for example, Li, S, and P and may optionally further include a halogen element. The sulfide-based solid electrolyte may be (e.g., may be selected from) sulfide-based solid electrolytes utilized in the solid electrolyte layer 30. The sulfide-based solid electrolyte may have, for example, an ionic conductivity of about 1×10⁻⁵ S/m or more at room temperature. The oxide-based solid electrolyte may include, for example, Li, O, and a transition metal element and may optionally further include other elements. The oxide-based solid electrolyte may be, for example, a solid electrolyte having an ionic conductivity of about 1×10⁻⁵ S/m or more at room temperature. The oxide-based solid electrolyte may be (e.g., may be selected from) oxide-based solid electrolytes utilized in the solid electrolyte layer 30.

A composite of Li₂S and a solid electrolyte includes a solid electrolyte. For the solid electrolyte, the above-described composite of Li₂S, carbon, and a solid electrolyte is referred to.

A composite of Li₂S, carbon, and a lithium salt includes Li₂S, carbon, and a lithium salt. For carbon, the above-described composite of Li₂S and carbon is referred to. The lithium salt is a compound that does not include sulfur (S). The lithium salt may be, for example, a binary compound including lithium and one element of (e.g., one element selected from) Groups 13 to 17 of the Periodic Table of Elements. The binary compound may include, for example, at least one of (e.g., at least one selected from) LiF, LiCl, LiBr, Lil, LiH, Li₂S, Li₂O, Li₂Se, Li₂Te, LisN, LisP, Li₃As, LisSb, Li₃Al₂, and/or LiBs. The lithium salt may be, for example, a ternary compound composed of lithium and two elements of (e.g., two elements selected from) Groups 13 to 17 of the Periodic Table of Elements. The ternary compound includes, for example, at least one of (e.g., at least one selected from) Li₃OCl, LiPF₆, LiBF₄, LiSbF₆, LiAsF₆, LiClO₄, LiAlO₂, LiAlCl₄, LiNOs, Li₂CO₃, LiBH₄, LisBOs, Li₃PO₄, Li₄NCl, Li₅NCl₂, and/or Li₃BN₂. The lithium salt is, for example, at least one lithium halide compound of (e.g., at least one lithium halide compound selected from) LiF, LiCl, LiBr, and/or Lil. The composite of Li₂S, carbon, and a lithium salt may be, for example, a composite of Li2, carbon, and a lithium halide. The composite of Li₂S, carbon, and a lithium salt may include a lithium halide compound so that ionic conductivity may be provided. The composite of Li₂S, carbon, and a lithium salt is distinguished from a simple mixture of Li₂S, carbon, and a lithium salt. In the simple mixture of Li₂S, carbon, and a lithium salt, a dense interface between Li₂S, carbon, and a lithium salt may not be maintained, and thus high interfacial resistance may be provided, which may reduce the lifespan characteristics of an all-solid secondary battery.

The composite of Li₂S and a lithium salt includes a lithium salt. For the lithium salt, the lithium salt utilized in the above-described composite of Li₂S, carbon, and a lithium salt is referred to.

A composite of Li₂S and a metal carbide includes a metal carbide. The metal carbide is, for example, two-dimensional metal carbide. The two-dimensional metal carbide is represented by, for example, Mₙ₊₁CₙTₓ (wherein M is a transition metal, T is a terminal group, T is O, OH, and/or F, n=1, 2, or 3, and x is a terminal group number). The two-dimensional metal carbide is, for example, Ti₂CTₓ, (Ti_{0.5},Nb_{0.5})₂CTₓ, Nb₂CTₓ, V₂CTₓ, Ti₃C₂Tₓ, (V_{0.5},Cr_{0.5})₃C₂Tₓ, Ti₃CNTₓ, Ta₄C₃Tₓ, Nb₄C₃Tₓ, or a combination thereof. A surface of the two-dimensional metal carbide is terminated with O, OH, and/or F, where the total number of O, OH and/or F groups at the surface is the terminal group number.

A composite of Li₂S, carbon, and a metal carbide includes carbon and a metal carbide. For carbon, the above-described composite of Li₂S and carbon is referred to. For a metal carbide, the above-described composite of Li₂S and a metal carbide is referred to.

A composite of Li₂S and a metal nitride includes a metal nitride. The metal nitride is, for example, two-dimensional metal nitride. The two-dimensional metal nitride is represented by, for example, Mₙ₊₁NₙTₓ (wherein M is a transition metal, T is a terminal group, T is O, OH, and/or F, n=1, 2, or 3, and x is a terminal group number). A surface of the two-dimensional metal nitride is terminated with O, OH, and/or F, where the total number of O, OH and/or F groups at the surface is the terminal group number.

A composite of Li₂S, carbon, and a metal nitride includes carbon and a metal nitride. For carbon, the above-described composite of Li₂S and carbon is referred to. For a metal nitride, the above-described composite of Li₂S and a metal nitride is referred to.

A content (e.g., amount) of the sulfide-based positive electrode active material included in the positive electrode active material layer 12 may be in a range of, for example, about 10 wt% to about 90 wt%, about 10 wt% to about 80 wt%, about 10 wt% to about 70 wt%, about 10 wt% to about 60 wt%, or about 10 wt% to about 50 wt% of the total weight of the positive electrode active material layer 12.

The positive electrode active material layer 12 may additionally include, for example, a sulfide-based compound that is distinguished from Li₂S. The sulfide-based compound may be, for example, a compound including a metal element other than Li and a sulfur element. The sulfide-based compound may be, for example, a compound including a sulfur element and at least one of (e.g., at least one selected from) metal elements having an atomic weight of 10 or more and belonging to Groups 1 to 14 of the Periodic Table of Elements. The sulfide-based compound may be, for example, FeS₂, VS₂, NaS, MnS, FeS, NiS, CuS, or a combination thereof. If (e.g., when) the positive electrode active material layer 12 additionally includes the sulfide-based compound, the cycle characteristics of an all-solid secondary battery may be further improved. A content (e.g., amount) of the sulfide-based compound, which is included in the positive electrode active material layer 12 and is distinguished from Li₂S, may be about 10 wt% or less, about 5 wt% or less, about 3 wt% or less, or about 1 wt% or less of the total weight of the positive electrode active material layer 12.

### Positive electrode layer: solid electrolyte

The positive electrode active material layer 12 may further include, for example, the solid electrolyte. The solid electrolyte may be, for example, a sulfide-based solid electrolyte. The solid electrolyte included in the positive electrode layer 10 may be similar to or different from the solid electrolyte included in the solid electrolyte layer 30. For details on the solid electrolyte, the section on the solid electrolyte layer 30 is referred to.

The solid electrolyte included in the positive electrode active material layer 12 may have an average particle diameter (D50) that is less than an average particle diameter (D50) of the solid electrolyte included in the solid electrolyte layer 30. For example, the average particle diameter (D50) of the solid electrolyte included in the positive electrode active material layer 12 may be about 90 % or less, about 80 % or less, about 70 % or less, about 60 % or less, about 50 % or less, about 40 % or less, about 30 % or less, or about 20 % or less than the average particle diameter (D50) of the solid electrolyte included in the solid electrolyte layer 30. The average particle diameter (D50) is, for example, a median particle diameter (D50). The median particle diameter (D50) refers to the value of the particle size corresponding to 50% from the smallest particle in a case of the total number of particles is 100% in the distribution curve accumulated in the order of the smallest particle size to the largest particle size.

A content (e.g., amount) of the solid electrolyte included in the positive electrode active material layer 12 may be in a range of, for example, about 1 wt% to about 40 wt%, about 1 wt% to about 30 wt%, about 1 wt% to about 20 wt%, or about 1 wt% to about 10 wt% of the total weight of the positive electrode active material layer 12.

### Positive electrode layer: conductive material

The positive electrode active material layer 12 may further include, for example, a conductive material. The conductive material may be, for example, a carbon-based conductive material, a metal-based conductive material, or a combination thereof. The carbon-based conductive material may be, for example, graphite, CB, AB, KB, a carbon fiber, or a combination thereof, but the present disclosure is not limited thereto. Any material utilized as a carbon-based conductive material in the art may be utilized. The metal-based conductive material may be a metal powder, a metal fiber, or a combination thereof, but the present disclosure is not limited thereto. Any material utilized as a metal-based conductive material in the art may be utilized. A content (e.g., amount) of the conductive material included in the positive electrode active material layer 12 may be in a range of, for example, about 1 wt% to about 30 wt%, about 1 wt% to about 20 wt%, or about 1 wt% to about 10 wt% of the total weight of the positive electrode active material layer 12.

### Positive electrode layer: binder

The positive electrode active material layer 12 may further include, for example, a binder. The binder is, for example, styrene butadiene rubber (SBR), polytetrafluoroethylene, polyvinylidene fluoride, polyethylene, and/or the like, but the present disclosure is not limited thereto. Any material utilized as a binder in the art may be utilized. A content (e.g., amount) of the binder included in the positive electrode active material layer 12 may be, for example, about 1 wt % to about 10 wt % of the total weight of the positive electrode active material layer 12. In one or more embodiments, the binder may not be provided.

### Positive electrode layer: other additives

In addition to the above-described positive electrode active material, solid electrolyte, binder, and conductive material, the positive electrode active material layer 12 may further include, for example, additives such as a filler, a coating agent, a dispersant, and/or an ion-conductive adjuvant.

As the filler, the coating agent, the dispersant, the ion-conductive adjuvant, and/or the like that may be included in the positive electrode active material layer 12, suitable materials generally utilized in an electrode of an all-solid secondary battery may be utilized.

### Positive electrode layer: positive electrode current collector

The positive electrode current collector 11 may be formed in the form of a plate, a foil, and/or the like made of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. In one or more embodiments, the positive electrode current collector 11 may not be provided. A thickness of the positive electrode current collector 11 is in a range of, for example, about 1 µm to about 100 µm, about 1 µm to about 50 µm, about 5 µm to about 25 µm, or about 10 µm to about 20 µm.

The positive electrode current collector 11 may include, for example, a base film and a metal layer disposed on one surface or both (e.g., opposite) surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or combination thereof. The base film may include, for example, an insulator. Because the base film includes an insulating thermoplastic polymer, in a case of a short circuit occurs, the base film may be softened or liquefied to block or reduce the operation of a battery, thereby suppressing or reducing a rapid increase in current. The metal layer may include indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer may serve as an electrochemical fuse and may be cut during an overcurrent to perform a short circuit prevention function. A limit current and a maximum current may be adjusted by adjusting a thickness of the metal layer. The metal layer may be plated or deposited on the base film. In a case of the thickness of the metal layer is decreased, the limit current and/or the maximum current of the positive electrode current collector 11 may be reduced, thereby improving the stability of a lithium battery during a short circuit. A lead tab may be added onto the metal layer to be connect to the outside. The lead tab may be welded to the metal layer or a metal layer/base film stack through ultrasonic welding, laser welding, spot welding, and/or the like. While the base film and/or the metal layer are melted during welding, the metal layer may be electrically connected to the lead tab. In order to more strongly weld the metal layer and the lead tab, a metal chip may be added between the metal layer and the lead tab. The metal chip may be a flake of the same material as a metal of the metal layer. The metal chip may be, for example, a metal foil or a metal mesh. The metal chip may be, for example, an aluminum foil, a copper foil, or a SUS foil. The metal chip may be disposed on the metal layer to then be welded to the lead tab so that the lead tab may be welded to a metal chip/metal layer stack or a metal chip/metal layer/base film stack. While the base film, the metal layer, and/or the metal chip are melted during welding, the metal layer or a metal layer/metal chip stack may be electrically connected to the lead tab. A metal chip and/or lead tab may be added to a portion on the metal layer. The base film may have, for example, a thickness of about 1 µm to about 50 µm, about 1.5 µm to about 50 µm, about 1.5 µm to about 40 µm, or about 1 µm to about 30 µm. If (e.g., when) the base film has a thickness in such ranges, a weight of an electrode assembly may be more effectively reduced. The base film may have, for example, a melting point of about 100 °C to about 300 °C, about 100 °C to about 250 °C, or about 100 °C to about 200 °C. If (e.g., when) the base film has a melting point in such ranges, the base film may be melted and easily coupled to the lead tab in a process of welding the lead tab.

Surface treatment such as corona treatment may be performed on the base film to improve adhesion between the base film and the metal layer. The metal layer may have, for example, a thickness of about 0.01 µm to about 3 µm, about 0.1 µm to about 3 µm, about 0.1 µm to about 2 µm, or about 0.1 µm to about 1 µm. If (e.g., when) the metal layer has a thickness in such ranges, the stability of an electrode assembly may be secured while conductivity is maintained. The metal chip may have, for example, a thickness of about 2 µm to about 10 µm, about 2 µm to about 7 µm, or about 4 µm to about 6 µm. If (e.g., when) the metal chip has a thickness in such ranges, connection between the metal layer and the lead tab may be more easily performed. If (e.g., when) the positive electrode current collector 11 has such a structure, a weight of a positive electrode may be reduced, thereby improving an energy density of the positive electrode and a lithium battery.

### Positive electrode layer: first inactive member

Referring to FIG. 1, the positive electrode layer 10 includes the positive electrode current collector 11 and the positive electrode active material layer 12 disposed on one surface of the positive electrode current collector 11. The first inactive member 40 is disposed on one side surface of the positive electrode layer 10. The first inactive member 40 is disposed on one side surface of the positive electrode active material layer 12 and one surface of the positive electrode current collector 11. Referring to FIG. 2, the first inactive member 40 is disposed on one side surface of the positive electrode active material layer 12 and is disposed between the solid electrolyte layer 30 and the positive electrode current collector 11 opposite to the solid electrolyte layer 30. The first inactive member 40 is not disposed on one side surface of the positive electrode current collector 11.

Because the first inactive member 40 is provided, cracks of the solid electrolyte layer 30 are prevented or reduced during manufacturing and/or charging/discharging of the all-solid secondary battery 1, thereby improving the cycle characteristics of the all-solid secondary battery 1. In the all-solid secondary battery 1 not including the first inactive member 40, during manufacturing and/or charging/discharging of the all-solid secondary battery 1, non-uniform pressure is applied to the solid electrolyte layer 30 in contact with the positive electrode layer 10, which may causes crack in the solid electrolyte layer 30 and increases a possibility that a short circuit occurs due to the growth of a lithium metal through the cracks.

In the all-solid secondary battery 1, a thickness T2 of the first inactive member 40 is greater than or equal to a thickness T1 of the positive electrode active material layer 12. In the all-solid secondary battery 1, the thickness T2 of the first inactive member 40 is substantially equal to a thickness T3 of the positive electrode layer 10. Because the thickness T2 of the first inactive member 40 is equal to the thickness T3 of the positive electrode layer 10, substantially uniform pressure is applied to the positive electrode layer 10 and the solid electrolyte layer 30, and the positive electrode layer 10 is in sufficiently close contact with the solid electrolyte layer 30 so that interfacial resistance between the positive electrode layer 10 and the solid electrolyte layer 30 is reduced. In one or more embodiments, the solid electrolyte layer 30 is sufficiently sintered during a press manufacturing process of the all-solid secondary battery 1, thereby reducing internal resistance of the solid electrolyte layer 30 and the all-solid secondary battery 1 including the same.

The first inactive member 40 is around (e.g., surrounds) a side surface of the positive electrode layer 10 and is contact with the solid electrolyte layer 30. Because the first inactive member 40 is around (e.g., surrounds) the side surface of the positive electrode layer 10 and is contact with the solid electrolyte layer 30, it is possible to effectively suppress or reduce cracks of the solid electrolyte layer 30 from being caused in the solid electrolyte layer 30 not in contact with the positive electrode layer 10 due to a pressure difference during a pressing process. The first inactive member 40 is around (e.g., surrounds) the side surface of the positive electrode layer 10 and is separated from the negative electrode layer 20, more specifically, the first negative electrode active material layer 22. The first inactive member 40 is around (e.g., surrounds) the side surface of the positive electrode layer 10, is in contact with the solid electrolyte layer 30, and is separated from the negative electrode layer 20. Therefore, a possibility that a short circuit occurs due to physical contact between the positive electrode layer 10 and the first negative electrode active material layer 22 is suppressed or reduced, or a possibility that a short circuit occurs due to overcharging of lithium is suppressed or reduced. For example, the first inactive member 40 is disposed on one side surface of the positive electrode active material layer 12 and concurrently is also disposed on one side surface of the positive electrode current collector 11, thereby more effectively suppressing a possibility that a short circuit occurs due to contact between the positive electrode current collector 11 and the negative electrode layer 20.

Referring to FIGS. 1 to 5, the first inactive member 40 (40a or 40b) extends from one side surface of the positive electrode layer 10 to an end portion of the solid electrolyte layer 30. Because the first inactive member 40 extends to the end portion of the solid electrolyte layer 30, it is possible to suppress or reduce cracks from occurring in the end portion of the solid electrolyte layer 30. The end portion of the solid electrolyte layer 30 is an outermost portion in contact with a side surface of the solid electrolyte layer 30. The first inactive member 40 extends to the outermost portion in contact with the side surface of the solid electrolyte layer 30. The first inactive member 40 is separated from the negative electrode layer 20, more specifically, the first negative electrode active material layer 22. The first inactive member 40 extends to the end portion of the solid electrolyte layer 30 but is not in contact with the negative electrode layer 20. The first inactive member 40 fills, for example, a space extending from one side surface of the positive electrode layer 10 to the end portion of the solid electrolyte layer 30.

Referring to FIGS. 1 and 2, a width W2 of the first inactive member 40 extending from one side surface of the positive electrode layer 10 to the end portion of the solid electrolyte layer 30 is in a range of, for example, about 1 % to about 30 %, about 1 % to about 25 %, about 1 % to about 20 %, about 1 % to about 15 %, about 1 % to about 10 %, or about 1 % to about 5 % of a width W1 between one side surface of the positive electrode layer 10 and the other side surface opposite to the one side surface. Referring to FIGS. 1 and 2, a width W2 of the first inactive member 40 extending from one side surface of the positive electrode layer 10 to the end portion of the solid electrolyte layer 30 is in a range of, for example, about 1 % to about 30 %, about 3 % to about 30 %, about 5 % to about 30 %, about 5 % to about 20 %, about 5 % to about 15 %, or about 5 % to about 10 % of a width W1 between one side surface of the positive electrode layer 10 and the other side surface opposite to the one side surface. In a case of the width W2 of the first inactive member 40 is excessively wide, an energy density of the all-solid secondary battery 1 is reduced. In a case of the width W2 of the first inactive member 40 is excessively narrow, an effect of arranging the first inactive member 40 is insignificant.

An area S1 of the positive electrode layer 10, such as an area S1 of the positive electrode active material layer 12 (e.g. a cross-sectional area S1 of the positive electrode layer 10, or a cross-sectional area S1 of the positive electrode active material layer 12, relative to a stacking direction or thickness direction of the all-solid secondary battery 1), is smaller than an area S3 of the solid electrolyte layer 30 (e.g. a cross-sectional area S3 of the solid electrolyte layer 30 relative to a stacking direction or thickness direction of the all-solid secondary battery 1) in contact with the positive electrode layer 10 (or the positive electrode active material layer 12). The first inactive member 40 having flame retardancy is disposed to be around (e.g., surround) the side surface of the positive electrode layer 10 (or the positive electrode active material layer 12) to compensate for an area difference between the positive electrode layer 10 (or the positive electrode active material layer 12) and the solid electrolyte layer 30. Because an area S2 of the first inactive member 40 (e.g. a cross-sectional area S2 of first inactive member 40 relative to a stacking direction or thickness direction of the all-solid secondary battery 1) having flame retardancy compensates for a difference between the area S1 of the positive electrode layer 10 (or the positive electrode active material layer 12) and the area S3 of the solid electrolyte layer 30, cracks of the solid electrolyte layer 30 caused by a pressure difference during a pressing process is effectively suppressed or reduced. For example, the sum of the area S1 of the positive electrode layer 10 (or the positive electrode active material layer 12) and the area S2 of the first inactive member 40 is equal to the area S3 of the solid electrolyte layer 30.

The area S1 of the positive electrode layer 10 (or the positive electrode active material layer 12) is, for example, less than about 100 %, about 99 % or less, about 98 % or less, about 97 % or less, about 96 % or less, or about 95 % or less of the area S3 of the solid electrolyte layer 30. The area S1 of the positive electrode layer 10 (or the positive electrode active material layer 12) is in a range of, for example, about 50 % to less than about 100 %, about 50 % to about 99 %, about 55 % to about 98 %, about 60 % to about 97 %, about 70 % to about 96 %, about 80 % to about 95 %, or about 85 % to about 95 % of the area S3 of the solid electrolyte layer 30.

In a case of the area S1 of the positive electrode layer 10 (or the positive electrode active material layer 12) is greater than or equal to the area S3 of the solid electrolyte layer 30, a possibility that a short circuit occurs due to physical contact between the positive electrode layer 10 (or the positive electrode active material layer 12) and the first negative electrode active material layer 22 is increased, or a possibility that a short circuit occurs due to overcharging of lithium is increased. The area S1 of the positive electrode layer 10 is equal to, for example, an area of the positive electrode active material layer 12. The area S1 of the positive electrode layer 10 is equal to, for example, an area of the positive electrode current collector 11.

The area S2 of the first inactive member 40 is, for example, about 50 % or less, about 40 % or less, about 30 % or less, about 20 % or less, or about 10 % or less of the area S1 of the positive electrode layer 10 (or the positive electrode active material layer 12). The area S2 of the first inactive member 40 is in a range of, for example, about 1 % to about 50 %, about 5 % to about 40 %, about 5 % to about 30 %, about 5 % to about 20 %, or about 5 % to about 15 % of the area S1 of the positive electrode layer 10 (or the positive electrode active material layer 12).

The area S1 of the positive electrode layer 10 (or the positive electrode active material layer 12) is smaller than an area S4 of the negative electrode current collector 21 (e.g. a cross-sectional area S4 of the negative electrode current collector 21 relative to a stacking direction or thickness direction of the all-solid secondary battery 1). The area S1 of the positive electrode layer 10 (or the positive electrode active material layer 12) is, for example, less than about 100 %, about 99 % or less, about 98 % or less, about 97 % or less, about 96 % or less, or about 95 % or less of the area S4 of the negative electrode current collector 21. The area S1 of the positive electrode layer 10 (or the positive electrode active material layer 12) is in a range of, for example, about 50 % to less than about 100 %, about 50 % to about 99 %, about 55 % to about 98 %, about 60 % to about 97 %, about 70 % to about 96 %, about 80 % to about 95 %, or about 85 % to about 95 % of the area S4 of the negative electrode current collector 21. The area S4 of the negative electrode current collector 21 is equal to, for example, an area of the negative electrode layer 20 (e.g. a cross-sectional area of the negative electrode layer 20 relative to a stacking direction or thickness direction of the all-solid secondary battery 1). The area S4 of the negative electrode current collector 21 is equal to, for example, an area of the first negative electrode active material layer 22 (e.g. a cross-sectional area of the first negative electrode active material layer 22 relative to a stacking direction or thickness direction of the all-solid secondary battery 1).

The "equal" area, length, width, thickness, and/or shape as used herein encompass all cases of having "substantially equal" area, length, width, thickness, and/or shape except for a case in which areas, lengths, widths, thicknesses, and/or shapes are intentionally expressed as being different. The "equal" area, length, width, and/or thickness encompass a range in which an unintentional difference in area, length, width, and/or thickness between comparison objects is less than about 3 %, less than about 1 %, less than about 0.5 %, or less than about 0.1 %.

A thickness of the first inactive member 40 is greater than, for example, a thickness of the first negative electrode active material layer 22. The thickness of the first negative electrode active material layer 22 is, for example, about 50 % or less, about 40 % or less, about 30 % or less, about 20 % or less, or about 10 % or less of the thickness of the first inactive member 40. The thickness of the first negative electrode active material layer 22 is in a range of, for example, about 1 % to about 50 %, about 1 % to about 40 %, about 1 % to about 30 %, about 1 % to about 20 %, or about 1 % to about 10 % of the thickness of the first inactive member 40.

The negative electrode layer 20 includes the negative electrode current collector 21 and the first negative electrode active material layer 22 disposed on one surface of the negative electrode current collector 21. For example, the other surface opposite to one surface of the negative electrode current collector 21 is free of the first negative electrode active material layer 22. For example, the first negative electrode active material layer 22 is disposed on only one surface of the negative electrode current collector 21, and the first negative electrode active material layer 22 is not disposed on the other surface.

The first inactive member 40 may be a gasket. The gasket is utilized as the first inactive member 40, thereby effectively suppressing or reducing cracks of the solid electrolyte layer 30 caused due to a pressure difference during a pressing process.

The first inactive member 40 has, for example, a single layer structure. In one or more embodiments, the first inactive member 40 may have a multi-layer structure. In the first inactive member 40 having the multi-layer structure, respective layers may have different compositions. The first inactive member 40 having the multi-layer structure may have, for example, a two-layer structure, a three-layer structure, a four-layer structure, or a five-layer structure. The first inactive member 40 having the multi-layer structure may include, for example, one or more adhesive layers and one or more support layers. For example, the adhesive layer effectively prevents or substantially prevents the positive electrode layer 10 from being separated from the solid electrolyte layer 30 due to a change in volume of the positive electrode layer 10 which is caused during a charging/discharging process of the all-solid secondary battery 1. In one or more embodiments, the adhesive layer provides a binding force between the support layer and other layers to improve film strength of the first inactive member 40. The support layer provides a support force to the first inactive member 40, prevents or substantially prevents non-uniformity of pressure applied to the solid electrolyte layer 30 during a pressing process or a charging/discharging process, and prevents or reduces shape deformation of the all-solid secondary battery 1 to be manufactured.

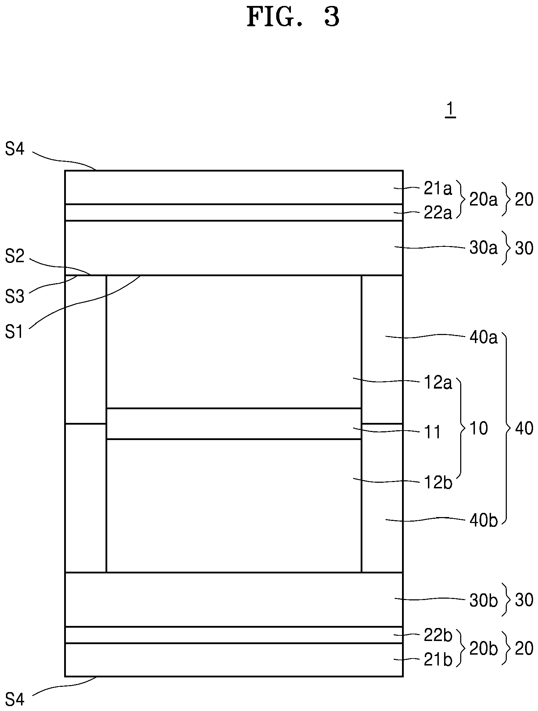

Referring to FIG. 3, an all-solid secondary battery 1 includes a positive electrode layer 10, negative electrode layers 20, and solid electrolyte layers 30 disposed between the positive electrode layer 10 and the negative electrode layers 20. The positive electrode layer 10 includes a positive electrode current collector 11 and each of a first positive electrode active material layer 12a and a second positive electrode active material layer 12b disposed on both (e.g., opposite) surfaces of the positive electrode current collector 11. The solid electrolyte layers 30 include a first solid electrolyte layer 30a in contact with the first positive electrode active material layer 12a and a second solid electrolyte layer 30b in contact with the second positive electrode active material layer 12b, respectively. The negative electrode layers 20 include a first negative electrode layer 20a in contact with the first solid electrolyte layer 30a and a second negative electrode layer 20b in contact with the second solid electrolyte layer 30b, respectively. First inactive members 40 are disposed between the first solid electrolyte layer 30a and the second solid electrolyte layer 30b opposite to each other to be around (e.g., surround) a side surface of the positive electrode layer 10. The first inactive members 40 include, for example, a (1a)^{th} inactive member 40a in contact with the first solid electrolyte layer 30a and a (1b)^{th} inactive member 40b in contact with the second solid electrolyte layer 30b. Therefore, the all-solid secondary battery 1 has a bi-cell structure. Because the all-solid secondary battery 1 has such a bi-cell structure, the solid electrolyte layers 30 and the negative electrode layers 20 are symmetrically disposed opposite to each other with respect to the positive electrode layer 10, thereby more effectively suppressing or reducing structural deformation and/or the like due to pressure applied during manufacturing of the all-solid secondary battery 1. Therefore, cracks of the solid electrolyte layer 30 is suppressed or reduced during a manufacturing process and/or a charging/discharging process of the all-solid secondary battery 1 to prevent or reduce the advent of a short circuit of the all-solid secondary battery 1, thereby further improving the cycle characteristics of the all-solid secondary battery 1. In one or more embodiments, because only one positive electrode current collector 11 is utilized for a plurality of positive electrode active material layers 12a and 12b, an energy density of the all-solid secondary battery 1 is increased.

Referring to FIGS. 1 to 5, the first inactive member 40 is, for example, a flame-retardant inactive member. The flame-retardant inactive member may provide flame retardancy to prevent or reduce a possibility of thermal runaway and ignition of the all-solid secondary battery 1. As a result, the safety of the all-solid secondary battery 1 is further improved. Because the flame-retardant inactive member absorbs residual moisture in the all-solid secondary battery 1, the deterioration of the all-solid secondary battery 1 is prevented or reduced to improve the lifespan characteristics of the all-solid secondary battery 1.

The flame-retardant inactive member includes, for example, a matrix and a filler. The matrix includes, for example, a substrate and a reinforcement material. The matrix includes, for example, a fibrous substrate and a fibrous reinforcement material. The matrix may include the substrate and thus may have elasticity. Therefore, the matrix may effectively receive a change in volume of the all-solid secondary battery 1 during charging/discharging and may be disposed at any one of one or more suitable positions. The substrate included in the matrix includes, for example, a first fibrous material. Because the substrate includes the first fibrous material, it is possible to effectively receive a change in volume of the positive electrode layer 10 caused during a charging/discharging process of the all-solid secondary battery 1, and it is possible to effectively suppress or reduce the deformation of the first inactive member 40 due to the change in volume of the positive electrode layer 10. The first fibrous material is, for example, a material having an aspect ratio (e.g., a ratio of the width to the height (e.g., length) of the first fibrous material in an image of the first fibrous material) of about 5 or more, about 20 or more, or about 50 or more. The first fibrous material is, for example, a material having an aspect ratio of about 5 to about 1,000, about 20 to about 1,000, or about 50 to about 1,000. The first fibrous material is, for example, an insulating material (e.g., an insulator). Because the first fibrous material is the insulating material (e.g., an insulator), it is possible to effectively prevent or reduce the advent of a short circuit between the positive electrode layer 10 and the negative electrode layer 20 caused by lithium dendrites and/or the like generated during charging/discharging of the all-solid secondary battery 1. The first fibrous material includes, for example, at least one of (e.g., at least one selected from) a pulp fiber, an insulating polymer fiber (e.g., a polymer fiber that is an insulator), and/or an ion-conductive polymer fiber. Because the matrix includes the reinforcement material, strength of the matrix is improved. Therefore, the matrix may prevent or reduce an excessive change in volume during charging/discharging of the all-solid secondary battery 1 and prevent or reduce the deformation of the all-solid secondary battery 1. The reinforcement material included in the matrix includes, for example, a second fibrous material. Because the reinforcement material includes the second fibrous material, strength of the matrix may be more substantially uniformly increased. The second fibrous material is, for example, a material having an aspect ratio of about 3 or more, about 5 or more, or about 10 or more. The second fibrous material is, for example, a material having an aspect ratio (e.g., a ratio of the width to the height of the second fibrous material in an image of the second fibrous material) of about 3 to about 100, about 5 to about 100, or about 10 to about 100. The second fibrous material is, for example, a flame-retardant material. Because the second fibrous material is a flame-retardant material, it is possible to effectively suppress or reduce ignition due to thermal runaway caused by an external impact or a charging/discharging process of the all-solid secondary battery 1. The second fibrous material is, for example, a glass fiber, a metal oxide fiber, a ceramic fiber, and/or the like.

The flame-retardant inactive member includes the filler in addition to the matrix. The filler may be disposed inside the matrix, on a surface of the matrix, or both inside and on the surface. The filler is, for example, an inorganic material. The filler included in the flame-retardant inactive member is, for example, a moisture getter. The filler adsorbs moisture at a temperature of, for example, less than about 100 °C to remove moisture remaining in the all-solid secondary battery 1, thereby preventing or reducing the deterioration of the all-solid secondary battery 1. In a case of a temperature of the all-solid secondary battery 1 is increased to be greater than or equal to about 150 °C or more due to thermal runaway caused by an external impact or a charging/discharging process of the all-solid secondary battery 1, the filler may release adsorbed moisture to effectively suppress or reduce ignition of the all-solid secondary battery 1. For example, the filler is, for example, a flame-retardant. The filler is, for example, metal hydroxide having moisture adsorbability. Metal hydroxide included in the filler is, for example, Mg(OH)₂, Fe(OH)₃, Sb(OH)₃, Sn(OH)₄, Tl(OH)₃, Zr(OH)₄, Al(OH)₃, or a combination thereof. A content (e.g., amount) of the filler included in the flame-retardant inactive member is in a range of, for example, about 10 parts by weight to about 80 parts by weight, about 20 parts by weight to about 80 parts by weight, about 30 parts by weight to about 80 parts by weight, about 40 parts by weight to about 80 parts by weight, about 50 parts by weight to about 80 parts by weight, about 60 parts by weight to about 80 parts by weight, or about 65 parts by weight to about 80 parts by weight with respect to about 100 parts by weight of the first inactive member 40 having flame retardancy.

The flame-retardant inactive member may further include, for example, a binder. The binder may include, for example, a curable polymer or a non-curable polymer. The curable polymer is a polymer that is cured by heat and/or pressure. The curable polymer is, for example, a solid at room temperature. The first inactive member 40 having flame retardancy includes, for example, a thermosetting film and/or a cured product thereof. A thermosetting polymer is, for example, TSA-66 manufactured by TORAY INDUSTRIES, INC.

The flame-retardant inactive member may include other materials in addition to the above-described substrate, reinforcement material, filler, and binder. The flame-retardant inactive member may further include at least one of (e.g., at least one selected from), for example, paper, an insulating polymer (e.g., a polymer that is an insulator), an ion-conductive polymer, an insulating inorganic material (e.g., an inorganic material that is an insulator), an oxide-based solid electrolyte, and/or a sulfide-based solid electrolyte. The insulating polymer may be, for example, an olefin-based polymer such as polypropylene (PP) or polyethylene (PE).

A density of the substrate or the reinforcement material included in the flame-retardant inactive member may be in a range of, for example, about 10 % to about 300 %, about 10 % to about 150 %, about 10 % to about 140 %, about 10 % to about 130 %, or about 10 % to about 120 % of a density of a positive electrode active material included in a positive electrode active material layer 12.

The first inactive member 40 is a member that does not include an electrochemically active material, for example, an electrode active material. An electrode active material is a material that absorbs/desorbs lithium. The first inactive member 40 is a member made of a material that is utilized in the art and is a material other than an electrode active material.

### Negative electrode layer

### Negative electrode layer: negative electrode active material

Referring to FIGS. 1 to 5, the negative electrode layer 20 includes a first negative electrode active material layer 22, 22a, 22b. The first negative electrode active material layer 22 includes, for example, a negative electrode active material and a binder.

The negative electrode active material included in the first negative electrode active material layer 22 is, for example, a negative electrode material that may form an alloy or a compound together with lithium.

The negative electrode active material included in the first negative electrode active material layer 22 has, for example, a particle form (e.g., a form that includes a plurality of particles). The negative electrode active material having the particle form has an average particle diameter of, for example, about 4 µm or less, about 3 µm or less, about 2 µm or less, about 1 µm or less, about 500 nm or less, about 300 nm or less, or about 100 nm or less. The negative electrode active material having the particle form has an average particle diameter of, for example, about 10 nm to about 4 µm, about 10 nm to about 3 µm, about 10 nm to about 2 µm, about 10 nm to about 1 µm, about 10 nm to about 500 nm, about 10 nm to about 300 nm, or about 10 nm to about 100 nm. Because the negative electrode active material has an average particle diameter within such ranges, reversible absorbing and/or desorbing of lithium may be more easily performed during charging/discharging. The average particle diameter of the negative electrode active material is, for example, a median diameter (D50) measured utilizing a laser type or kind particle size distribution meter.

The negative electrode active material included in the first negative electrode active material layer 22 includes, for example, at least one of (e.g., at least one selected from) a carbon-based negative electrode active material and/or a metal or metalloid negative electrode active material.

The carbon-based negative electrode active material includes, for example, amorphous carbon, crystalline carbon, porous carbon, or a combination thereof.

The carbon-based negative electrode active material is particularly amorphous carbon. Amorphous carbon is, for example, CB, AB, furnace black (FB), KB, graphene and/or the like but the present disclosure is not necessarily limited thereto. Any material classified as amorphous carbon in the art may be utilized. Amorphous carbon is carbon that does not have crystallinity or has very low crystallinity and is distinguished from crystalline carbon or graphite-based carbon.

The carbon-based negative electrode active material may be, for example, porous carbon. A pore volume of porous carbon is in a range of, for example, about 0.1 cc/g to about 10.0 cc/g, about 0.5 cc/g to about 5 cc/g, or about 0.1 cc/g to about 1 cc/g. An average pore diameter of porous carbon is in a range of, for example, about 1 nm to about 50 nm, about 1 nm to about 30 nm, or about 1 nm to about 10 nm. A BET specific surface area of porous carbon is in a range of, for example, about 100 m²/g to about 3,000 m²/g. A BET specific surface area of porous carbon for example can be measured by a method according to ISO 9277:2022.

The metal or metalloid negative electrode active material includes at least one of (e.g., at least one selected from) the group consisting of gold (Au), platinum (Pt), palladium (Pd), silicon (Si), silver (Ag), aluminum (Al), bismuth (Bi), tin (Sn), and/or zinc (Zn), but the present disclosure is not necessarily limited thereto. Any material, which is utilized as a metal negative electrode active material or a metalloid negative electrode active material forming an alloy or a compound together with lithium in the art, may be utilized. For example, because nickel (Ni) does not form an alloy with lithium, nickel (Ni) is not a metal negative electrode active material.

Among such negative electrode active materials, the first negative electrode active material layer 22 includes one negative electrode active material or a mixture of a plurality of different negative electrode active materials. For example, the first negative electrode active material layer 22 may include only amorphous carbon or at least one of (e.g., at least one selected from the group consisting of) gold (Au), platinum (Pt), palladium (Pd), silicon (Si), silver (Ag), aluminum (Al), bismuth (Bi), tin (Sn), and/or zinc (Zn). In one or more embodiments, the first negative electrode active material layer 22 may include a mixture of amorphous carbon and at least one of (e.g., at least one selected from the group consisting of) gold (Au), platinum (Pt), palladium (Pd), silicon (Si), silver (Ag), aluminum (Al), bismuth (Bi), tin (Sn), and/or zinc (Zn). A mixing ratio of the mixture of amorphous carbon to gold and/or the like is in a range of, for example, about 99:1 to about 1:99, about 10:1 to about 1:2, about 5:1 to about 1:1, or about 4:1 to about 2:1 based on a weight ratio, but the present disclosure is not necessarily limited to such a range and is selected according to the desired or required characteristics of the all-solid secondary battery 1. Because the negative electrode active material has such compositions, the cycle characteristics of the all-solid secondary battery 1 are further improved.

The negative electrode active material included in the first negative electrode active material layer 22 includes, for example, a mixture of first particles made of amorphous carbon and second particles made of a metal or a metalloid. A metal or metalloid includes, for example, gold (Au), platinum (Pt), palladium (Pd), silicon (Si), silver (Ag), aluminum (Al), bismuth (Bi), tin (Sn), and/or the like. In one or more embodiments, a metalloid is a semiconductor. A content (e.g., amount) of the second particles is in a range of about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt% with respect to the total weight of the mixture. Because the second particles have a content (e.g., amount) within such ranges, for example, the cycle characteristics of the all-solid secondary battery 1 are further improved.

In one or more embodiments, the first negative electrode active material layer 22 includes a composite negative electrode active material. The composite negative electrode active material may include, for example, a carbon-based support and a metal-based negative electrode active material supported on the carbon-based support. Because the composite negative electrode active material has such a structure, it is possible to prevent or reduce the localization of the metal-based negative electrode material in the first negative electrode active material layer 22 and obtain the substantially uniform distribution thereof. As a result, it is possible to further improve the cycle characteristics of the all-solid secondary battery 1 including the first negative electrode active material layer 22.

The metal-based negative electrode active material supported on the carbon-based support includes, for example, a metal, a metal oxide, a composite of a metal and a metal oxide, or a combination thereof. Examples of the metal include gold (Au), platinum (Pt), palladium (Pd), silicon (Si), silver (Ag), aluminum (Al), bismuth (Bi), tin (Sn), tellurium (Te), zinc (Zn), and/or the like. Examples of the metal oxide includes gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, zinc (Zn) oxide, and/or the like. The metal oxide may include, for example, AuₓO_{y} (wherein 0<x≤2 and 0<y≤3), PtₓO_{y} (wherein 0<x≤1 and 0<y≤2), PdₓO_{y} (wherein 0<x≤1 and 0<y≤1), SiₓO_{y} (wherein 0<x≤1 and 0<y≤2), AgₓO_{y} (wherein 0<x≤2 and 0<y≤1), AlₓO_{y} (wherein 0<x≤2 and 0<y≤3), BiₓO_{y} (wherein 0<x≤2 and 0<y≤3), SnₓO_{y} (wherein 0<x≤1 and 0<y≤2), TeₓO_{y} (0<x≤1 wherein 0<y≤3), ZnₓO_{y} (0<x≤1 wherein 0<y≤1), or a combination thereof. The composite of a metal and a metal oxide may include, for example, a composite of Au and AuₓO_{y} (wherein 0<x≤2 and 0<y≤3), a composite of Pt and PtₓO_{y} (wherein 0<x≤1 and 0<y≤2), a composite of Pd and PdₓO_{y} (wherein 0<x≤1 and 0<y≤1), a composite of Si and SiₓO_{y} (wherein 0<x≤1 and 0<y≤2), a composite of Ag and AgₓO_{y} (wherein 0<x≤2 and 0<y≤1), a composite of Al and AlₓO_{y} (wherein 0<x≤2 and 0<y≤3), a composite of Bi and BiₓO_{y} (wherein 0<x≤2 and 0<y≤3), a composite of Sn and SnₓO_{y} (wherein 0<x≤1 and 0<y≤2), a composite of Te and TeₓO_{y} (wherein 0<x≤1 and\ 0<y≤3), a composite of Zn and ZnₓO_{y} (wherein 0<x≤1 and 0<y≤1), or a combination thereof.

The carbon-based support includes, for example, amorphous carbon. Amorphous carbon includes, for example, CB, AB, furnace black (FB), KB, graphene, activated carbon, carbon nanofibers (CNFs), carbon nanotubes (CNTs), and/or the like, but the present disclosure is not necessarily limited thereto. Any material classified as amorphous carbon in the art may be utilized. Amorphous carbon is carbon that does not have crystallinity or has very low crystallinity and is distinguished from crystalline carbon or graphite-based carbon. A carbonaceous material is, for example, a carbon-based negative electrode active material.

The composite negative electrode active material has, for example, a particle form. The composite negative electrode active material having a particle form has, for example, a particle diameter (e.g. an average particle diameter, such as D50) of about 10 nm to about 4 µm, about 10 nm to about 1 µm, about 10 nm to about 500 nm, about 10 nm to about 200 nm, or about 10 nm to about 100 nm. In a case of the composite negative electrode active material has a particle size in such ranges, reversible absorbing and/or desorbing of lithium may be more easily performed during charging/discharging. The metal-based negative electrode active material supported on the carbon-based support may have, for example, a particle form. The metal-based negative electrode active material may have, for example, a particle diameter of about 1 nm to about 200 nm, about 1 nm to about 150 nm, about 5 nm to about 100 nm, or about 10 nm to about 50 nm. The carbon-based support may have, for example, a particle form. The carbon-based support having a particle form may have, for example, a particle diameter of about 10 nm to about 2 µm, about 10 nm to about 1 µm, about 10 nm to about 500 nm, about 10 nm to about 200 nm, or about 10 nm to about 100 nm. Because the carbon-based support has a particle diameter in such ranges, the carbon-based support may be more substantially uniformly disposed in the first negative electrode active material layer 22. The carbon-based support may include, for example, nanoparticles having a particle diameter of 500 nm or less. The particle diameter of the composite negative electrode active material, the particle diameter of the metal-based negative electrode active material, and the particle diameter of the carbon-based support are, for example, average particle diameters. An average particle diameter is, for example, a median diameter (D50) measured utilizing a laser type or kind particle size distribution meter. In one or more embodiments, an average particle diameter may be determined automatically utilizing software from, for example, an electron microscope image or determined manually according to a manual.

### Negative electrode layer: binder

The binder included in the first negative electrode active material layer 22 is, for example, SBR, polytetrafluoroethylene, polyvinylidene fluoride, polyethylene, a vinylidene fluoride/hexafluoropropylene copolymer, polyacrylonitrile, polymethyl methacrylate, and/or the like but the present disclosure is not necessarily limited thereto. Any material utilized as a binder in the art may be utilized. The binder may include a single binder or a plurality of different binders.

The first negative electrode active material layer 22 includes the binder and thus is stabilized on the negative electrode current collector 21. In one or more embodiments, cracks of the first negative electrode active material layer 22 are suppressed or reduced despite a change in volume and/or relative position of the first negative electrode active material layer 22 during charging/discharging. For example, in a case of the first negative electrode active material layer 22 does not include a binder, the first negative electrode active material layer 22 may be easily separated from the negative electrode current collector 21. In a case of the first negative electrode active material layer 22 is separated from the negative electrode current collector 21, at an exposed portion of the negative electrode current collector 21, the negative electrode current collector 21 comes into contact with the solid electrolyte layer 30, and thus a possibility of the occurrence of a short circuit is increased. For example, slurry in which materials constituting the first negative electrode active material layer 22 are dispersed is applied on the negative electrode current collector 21 and dried to manufacture the first negative electrode active material layer 22. The binder is included in the first negative electrode active material layer 22, thereby stably dispersing a negative electrode active material in the slurry. For example, in a case of the slurry is applied on the negative electrode current collector 21 through a screen printing method, it is possible to suppress or reduce clogging of a screen (for example, clogging due to aggregates of the negative electrode active material).

### Negative electrode layer: other additives

The first negative electrode active material layer 22 may further include additives utilized in a all-solid secondary battery, such as a filler, a coating agent, a dispersant, and an ion-conductive adjuvant.

### Negative electrode layer: solid electrolyte

The first negative electrode active material layer 22 may further include a solid electrolyte. The solid electrolyte may be, for example, a material including (e.g., selected from) solid electrolytes included in the solid electrolyte layer 30. The solid electrolyte included in the first negative electrode active material layer 22 may serve as a reaction point at which the formation of a lithium metal starts in the first negative electrode active material layer 22 or may serve as a space for storing the formed lithium metal or as a path for transferring lithium ions. In one or more embodiments, the solid electrolyte may not be provided in the first negative electrode active material layer 22.

In the first negative electrode active material layer 22, a content (e.g., amount) of the solid electrolyte may be high, for example, in a region adjacent to the solid electrolyte layer 30, and may be low in a region adjacent to the negative electrode current collector 21. In the first negative electrode active material layer 22, the solid electrolyte may have, for example, a concentration gradient in which a concentration decreases from the region adjacent to the solid electrolyte layer 30 to the region adjacent to the negative electrode current collector 21.

### Negative electrode layer: first negative electrode active material layer

A ratio (B/A) of initial charge capacity (B) of the first negative electrode active material layer 22 to initial charge capacity (A) of the positive electrode active material layer 12 is in a range of about 0.005 to about 0.45. The initial charge capacity of the positive electrode active material layer 12 is determined by charging from a first OCV to a maximum charging voltage vs. Li/Li⁺. The initial charge capacity of the first negative electrode active material layer 22 is determined by charging from a second OCV to a voltage of about 0.01 V vs. Li/Li⁺.

The maximum charging voltage is determined according to types (kinds) of positive electrode active materials. The maximum charging voltage may be, for example, about 1.5 V, about 2.0 V, about 2.5 V, about 3.0 V, about 3.5 V, about 4.0 V, about 4.2 V, or about 4.3 V. For example, the maximum charging voltage of Li₂S or a Li₂S-contaning composite may be about 2.5 V vs. Li/Li⁺. For example, the maximum charging voltage of Li₂S or a Li₂S-contaning composite may be about 2.8 V for Li/Li⁺. For example, the maximum charging voltage of Li₂S or a Li₂S-contaning composite may be about 3.0 V vs. Li/Li⁺. The ratio (B/A) of the initial charge capacity (B) of the first negative electrode active material layer 2 to the initial charge capacity (A) of the positive electrode active material layer 12 is in a range of, for example, about 0.01 to about 0.3, about 0.01 to about 0.2, or about 0.05 to about 0.1.

The initial charge capacity (mAh) of the positive electrode active material layer 12 is obtained by multiplying charge specific capacity (mAh/g) of the positive electrode active material layer 12 by mass (g) of the positive electrode active material of the positive electrode active material layer 12. In a case of a plurality of types (kinds) of positive electrode active materials are utilized, a value is calculated by multiplying charge specific capacity by mass for each positive electrode active material, and the sum of such values is the initial charge capacity of the positive electrode active material layer 12. The initial charge capacity of the first negative electrode active material layer 22 is also calculated in substantially the same manner. The initial charge capacity of the first negative electrode active material layer 22 is obtained by multiplying charge specific capacity (mAh/g) of the first negative electrode active material layer 22 by mass (g) of the negative electrode active material of the first negative electrode active material layer 22. In a case of a plurality of types (kinds) of negative electrode active materials are utilized, a value is calculated by multiplying charge specific capacity by mass for each negative electrode active material, and the sum of such values is the initial charge capacity of the first negative electrode active material layer 22. The charge specific capacity of each of the positive electrode active material and the negative electrode active material may be measured utilizing an all-solid half-cell utilizing a lithium metal as a counter electrode. The initial charge capacity of each of the positive electrode active material layer 12 and the first negative electrode active material layer 22 may be directly measured at a constant current density of, for example, about 0.1 mA/cm² utilizing an all-solid half-cell. For a positive electrode, the measurement may be performed at an operating voltage from the first OCV to a maximum charging voltage, for example, about 3.0 V vs. Li/Li⁺. For a negative electrode, the measurement may be performed at an operating voltage from the second OCV to about 0.01 V for the negative electrode, for example, a lithium metal. For example, an all-solid half-cell including a positive electrode active material layer may be charged from the first OCV to about 3.0 V at a constant current of about 0.1 mA/cm², and an all-solid half-cell including a first negative electrode active material layer may be charged from the second OCV to about 0.01 V at a constant current of about 0.1 mA/cm². A current density during constant current charging may be, for example, about 0.2 mA/cm² or about 0.5 mA/cm². The all-solid half-cell including the positive electrode active material layer may be charged, for example, from the first OCV to about 2.5 V, about 3.0 V, about 3.5 V, or about 4.0 V. A maximum charging voltage of a positive electrode active material layer may be determined according to a maximum voltage of a battery that satisfies safety conditions according to JIS C 8712:2015 of the Japanese Standard Association, the entire content of which is hereby incorporated by reference.

In a case of the initial charge capacity of the first negative electrode active material layer 22 is excessively low, the first negative electrode active material layer 22 becomes very thin, and thus lithium dendrites formed between the first negative electrode active material layer 22 and the negative electrode current collector 21 during a repeated charging/discharging process collapse the first negative electrode active material layer 22, which makes it difficult to improve the cycle characteristics of the all-solid secondary battery 1. In a case of charge capacity of the first negative electrode active material layer 22 is excessively increased, an energy density of the all-solid secondary battery 1 is lowered, and internal resistance of the all-solid secondary battery 1 due to the first negative electrode active material layer 22 is increased, which makes it difficult to improve the cycle characteristics of the all-solid secondary battery 1.

A thickness of the first negative electrode active material layer 22 is, for example, about 50 % or less, about 40 % or less, about 30 % or less, about 20 % or less, about 10 % or less, or about 5 % or less of a thickness of the positive electrode active material layer 12. The thickness of the first negative electrode active material layer 22 is in a range of, for example, about 1 % to about 50 %, about 1 % to about 40 %, about 1 % to about 30 %, about 1 % to about 20 %, about 1 % to about 10 %, or about 1 % to about 5 % of the thickness of the positive electrode active material layer 12. The thickness of the first negative electrode active material layer 22 is in a range of, for example, about 1 µm to about 20 µm, about 2 µm to about 15 µm, or about 3 µm to about 10 µm. In a case of the first negative electrode active material layer 22 is excessively thin, lithium dendrites formed between the first negative electrode active material layer 22 and the negative electrode current collector 21 collapse the first negative electrode active material layer 22, which makes it difficult to improve the cycle characteristics of the all-solid secondary battery 1. In a case of the thickness of the first negative electrode active material layer 22 is excessively increased, an energy density of the all-solid secondary battery 1 is lowered, and internal resistance of the all-solid secondary battery 1 due to the first negative electrode active material layer 22 is increased, which makes it difficult to improve the cycle characteristics of the all-solid secondary battery 1. In a case of the thickness of the first negative electrode active material layer 22 is decreased, for example, the initial charge capacity of the first negative electrode active material layer 22 is also decreased.

### Negative electrode layer: second negative electrode active material layer

The all-solid secondary battery 1 may further include, for example, a second negative electrode active material layer which, after the all-solid secondary battery 1 is charged, is disposed between the negative electrode current collector 21 and the first negative electrode active material layer 22. The second negative electrode active material layer is a metal layer including lithium or a lithium alloy. The metal layer includes lithium or a lithium alloy. Therefore, because the second negative electrode active material layer is the metal layer including lithium, the second negative electrode active material layer serves as, for example, a lithium reservoir. The lithium alloy is, for example, a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but the present disclosure is not limited thereto. Any material utilized as a lithium alloy in the art may be utilized. The second negative electrode active material layer may be made of one of (e.g., one selected from) such alloys and/or lithium, or may be made of one of (e.g., one selected from) a plurality of types (kinds) of alloys. The second negative electrode active material layer is, for example, a plated layer. For example, during a charging process of the all-solid secondary battery 1, the second negative electrode active material layer is precipitated between the first negative electrode active material layer 22 and the negative electrode current collector 21.

A thickness of the second negative electrode active material layer is in a range of, for example, about 1 µm to about 500 µm, about 1 µm to about 200 µm, about 1 µm to about 150 µm, about 1 µm to about 100 µm, or about 1 µm to about 50 µm, but the present disclosure is not particularly limited. In a case of the second negative electrode active material layer is excessively thin, it is difficult for the second negative electrode active material layer to serve as a lithium reservoir. In a case of the second negative electrode active material layer is excessively thick, there is a possibility that the mass and volume of the all-solid secondary battery 1 are increased, and the cycle characteristics of the all-solid secondary battery 1 are rather deteriorated.

In one or more embodiments, in the all-solid secondary battery 1, for example, before the all-solid secondary battery 1 is assembled, the second negative electrode active material layer may be disposed between the negative electrode current collector 21 and the first negative electrode active material layer 22. In a case of the second negative electrode active material layer 23 is disposed between the negative electrode current collector 21 and the first negative electrode active material layer 22 before the all-solid secondary battery 1 is assembled, the second negative electrode active material layer is the metal layer including lithium and thus serves as a lithium reservoir. For example, before the all-solid secondary battery 1 is assembled, a lithium foil may be disposed between the negative electrode current collector 21 and the first negative electrode active material layer 22.

In a case of the second negative electrode active material layer is precipitated at the all-solid secondary battery 1 being charged after being assembled, because the second negative electrode active material layer is not included during assembling of the all-solid secondary battery 1, an energy density of the all-solid secondary battery 1 is increased. In a case of the all-solid secondary battery 1 is charged, the first negative electrode active material layer 22 is charged beyond charge capacity thereof. For example, the first negative electrode active material layer 22 is overcharged. At the beginning period of charging, lithium is absorbed in the first negative electrode active material layer 22. The negative electrode active material included in the first negative electrode active material layer 22 forms an alloy or a compound together with lithium ions moving from the positive electrode layer 10. In a case of the first negative electrode active material layer 22 is charged beyond capacity thereof, for example, lithium is precipitated on a rear surface of the first negative electrode active material layer 22, that is, between the negative electrode current collector 21 and the first negative electrode active material layer 22, and a metal layer corresponding to the second negative electrode active material layer is formed by the precipitated lithium. The second negative electrode active material layer is a metal layer mainly made of lithium (that is, metal lithium). Such a result is obtained, for example, because the negative electrode active material included in the first negative electrode active material layer 22 includes a material that forms an alloy or a compound together with lithium. During discharging, lithium in the first negative electrode active material layer 22 and the second negative electrode active material layer, that is, the metal layer, is ionized to move toward the positive electrode layer 10. Therefore, in the all-solid secondary battery 1, lithium may be utilized as a negative electrode active material. In one or more embodiments, because the first negative electrode active material layer 22 covers the second negative electrode active material layer, the first negative electrode active material layer 22 serves as a protective layer for the second negative electrode active material layer, that is, the metal layer, and concurrently serves to suppress or reduce precipitation growth of lithium dendrites. Accordingly, a short circuit and a capacity reduction of the all-solid secondary battery 1 are suppressed or reduced, and as a result, the cycle characteristics of the all-solid secondary battery 1 are improved. In one or more embodiments, in a case of the second negative electrode active material layer is disposed at the all-solid secondary battery 1 being charged after being assembled, the negative electrode layer 20, that is, the negative electrode current collector 21, the first negative electrode active material layer 22, and a region therebetween, are Li-free regions that do not include lithium (Li) in an initial state of the all-solid secondary battery 1 or in a state after the all-solid secondary battery 1 is fully discharged.

### Negative electrode Layer: negative electrode current collector

The negative electrode current collector 21, 21a, 21b is made of, for example, a material that does not react with lithium, that is, does not form either an alloy or a compound with lithium. A material constituting the negative electrode current collector 21 is, for example, copper (Cu), stainless steel, titanium (Ti), iron (Fe), cobalt (Co), or nickel (Ni), but the present disclosure is not necessarily limited thereto. Any material utilized as an electrode current collector in the art may be utilized. The negative electrode current collector 21 may be made of at least one of (e.g., at least one selected from) the above-described metals, an alloy of two or more metals, and/or a coating material. The negative electrode current collector 21 is, for example, in the form of a plate or foil.

For example, the all-solid secondary battery 1 may further include a thin film including an element, which is capable of forming an alloy together with lithium, on one surface of the negative electrode current collector 21. The thin film is disposed between the negative electrode current collector 21 and the first negative electrode active material layer 22. The thin film includes, for example, an element capable of forming an alloy together with lithium. The element capable of forming an alloy together with lithium is, for example, gold, silver, zinc, tin, indium, silicon, aluminum, bismuth, and/or the like, but the present disclosure is not necessarily limited thereto. Any element capable of forming an alloy together with lithium in the art may be utilized. The thin film is made of at least one of (e.g., at least one selected from) the metals and/or an alloy of a plurality of metals. The thin film is disposed on one surface of the negative electrode current collector 21, for example, thereby further flattening a precipitated form of the second negative electrode active material layer precipitated between the thin film and the first negative electrode active material layer 22 and further improving the cycle characteristics of the all-solid secondary battery 1.

A thickness of the thin film is in a range of, for example, about 1 nm to about 800 nm, about 10 nm to about 700 nm, about 50 nm to about 600 nm, or about 100 nm to about 500 nm. In a case of the thickness of the thin film is less than about 1 nm, it may be difficult for the thin film to function. In a case of the thin film is excessively thick, the thin film itself absorbs lithium, and thus an amount of lithium precipitated at a negative electrode decreases, resulting in a decrease in energy density of the all-solid secondary battery 1 and resulting in degradation in cycle characteristics of the all-solid secondary battery 1. The thin film may be disposed on the negative electrode current collector 21 through, for example, a vacuum deposition method, a sputtering method, a plating method, and/or the like, and any method capable of forming a thin film in the art may be utilized.

The negative electrode current collector 21 may include, for example, a base film and a metal layer disposed on one surface or both (e.g., opposite) surfaces of the base film. The base film may include, for example, a polymer. The polymer may be, for example, a thermoplastic polymer. The polymer may include, for example, PET, PE, PP, PBT, PI, or combination thereof. The polymer may be an insulating polymer (e.g., a polymer that is an insulator). Because the base film includes an insulating thermoplastic polymer (e.g., a thermoplastic polymer that is an insulator), in a case of a short circuit occurs, the base film may be softened or liquefied to block or reduce the operation of a battery, thereby suppressing or reducing a rapid increase in current. The metal layer may include, for example, copper (Cu), stainless steel, titanium (Ti), iron (Fe), cobalt (Co), nickel (Ni), or an alloy thereof. The negative electrode current collector 21 may additionally include a metal chip and/or a lead tab. For additional details of the base film, the metal layer, the metal chip, and the lead tab of the negative electrode current collector 21, the above-described positive electrode current collector 11 is referred to. Because the negative electrode current collector 21 has such a structure, a weight of a negative electrode may be reduced, thereby improving an energy density of the negative electrode and a lithium battery.

### Negative electrode layer: second inactive member

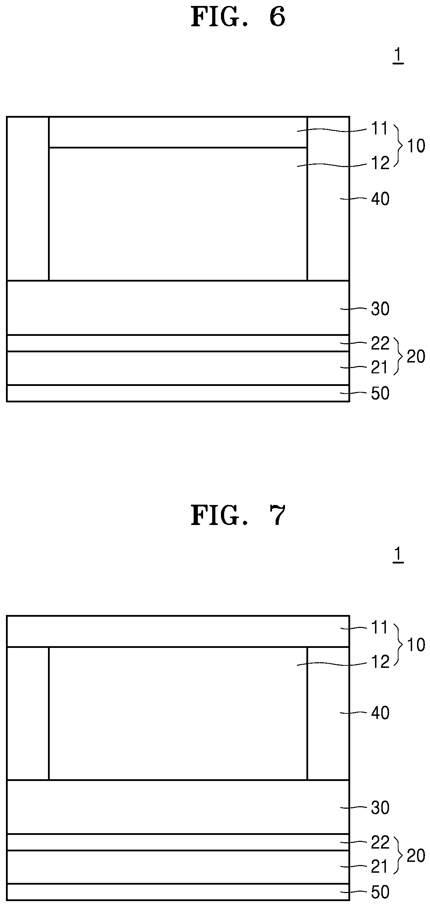

Referring to FIGS. 6 to 9, the all-solid secondary battery 1, 1a, 1b further includes second inactive members 50 (50a, 50b, and 50c) disposed on the other surface of the negative electrode current collector 21, 21 a, 21b.

The second inactive member 50 is different from the first inactive member 40 in that the second inactive member 50 additionally includes a conductive material to have conductivity. The second inactive member 50 is, for example, a conductive flame-retardant inactive member.

The conductive material includes, for example, graphite, CB, AB, KB, Denka black, carbon fiber, CNTs, graphene, a metal fiber, a metal powder, and/or the like. Electronic conductivity at about 25 °C of the second inactive member 50 is, for example, about 100 times or more, about 1,000 times or more, or about 10,000 times or more electronic conductivity at about 25 °C of the first inactive member 40.

The second inactive member 50 includes, for example, a matrix, a filler, and a conductive material. The matrix includes, for example, a substrate and a reinforcement material. The second inactive member 50 may further include a filler and a binder. A content (e.g., amount) of the conductive material included in the second inactive member 50 is in a range of, for example, about 1 part by weight to about 30 parts by weight, about 1 part by weight to about 20 parts by weight, about 1 part by weight to about 15 parts by weight, about 1 part by weight to about 10 parts by weight, about 5 parts by weight to about 40 parts by weight, about 5 parts by weight to about 30 parts by weight, or about 5 parts by weight to about 35 parts by weight with respect to about 100 parts by weight of the second inactive member 50.

A Young's modulus of the second inactive member 50 is, for example, less than a Young's modulus of the negative electrode current collector 21. The Young's modulus of the second inactive member 50 is, for example, about 50 % or less, about 30 % or less, about 10 % or less, or about 5 % or less of the Young's modulus of the negative electrode current collector 21. The Young's modulus of the second inactive member 50 is in a range of, for example, about 0.01 % to about 50 %, about 0.1 % to about 30 %, about 0.1 % to about 10 %, or about 1 % to about 5 % of the Young's modulus of the negative electrode current collector 21. The Young's modulus of the second inactive member 50 is, for example, about 100 MPa or less, about 50 MPa or less, about 30 MPa or less, about 10 MPa or less, or about 5 MPa or less. The Young's modulus of the second inactive member 50 is in a range of, for example, about 0.01 MPa to about 100 MPa, about 0.1 Mpa to about 50 MPa, about 0.1 MPa to about 30 MPa, about 0.1 MPa to about 10 MPa, or about 1 MPa to about 5 MPa.

Because the second inactive members 50 (50a and 50b) have conductivity, the second inactive member 50 may serve as a negative electrode current collector 21. In one or more embodiments, because the second inactive members 50 (50a and 50b) have the Young's modulus that is less than that of the negative electrode current collector 21, the second inactive members 50 may effectively receive a change in volume of the negative electrode layer 20 during charging/discharging of the all-solid secondary battery 1. As a result, because the second inactive members 50 (50a and 50b) effectively relieve internal stress due to a change in volume of the all-solid secondary battery 1 during charging/discharging of the all-solid secondary battery 1, it is possible to improve the cycle characteristics of the all-solid secondary battery 1.

A thickness of the second inactive member 50 is greater than, for example, the thickness of the first negative electrode active material layer 22. Because the second inactive member 50 is thicker than the first negative electrode active material layer 22, the second inactive member 50 may more effectively receive a change in volume of the negative electrode layer 20 during charging/discharging. The thickness of the first negative electrode active material layer 22 is, for example, about 50 % or less, about 40 % or less, about 30 % or less, about 20 % or less, or about 10 % or less of the thickness of the second inactive member 50. The thickness of the first negative electrode active material layer 22 is in a range of, for example, about 1 % to about 50 %, about 1 % to about 40 %, about 1 % to about 30 %, about 1 % to about 20 %, or about 1 % to about 10 % of the thickness of the second inactive member 50. The thickness of the second inactive member 50 is in a range of, for example, about 1 µm to about 300 µm, about 10 µm to about 300 µm, about 50 µm to about 300 µm, or about 100 µm to about 200 µm. In a case of the second inactive member 50 is excessively thin, an intended effect may be difficult to provide, and in a case of the second inactive member 50 is excessively thick, an energy density of the all-solid secondary battery 1 may be decreased. A form of the second inactive member 50 is not particularly limited and may be selected according to a form of the all-solid secondary battery 1. The second inactive member 50 may have, for example, a sheet form, a rod form, or a gasket form.

The second inactive member 50 may be disposed, for example, on one surface or both (e.g., opposite) surfaces of the all-solid secondary battery 1. The second inactive member 50 may be disposed, for example, between a plurality of stacked all-solid secondary batteries 1. For example, the second inactive member 50 may be disposed between the plurality of stacked all-solid secondary batteries 1, on an uppermost surface, and/or on a lowermost surface.

A ratio of a volume of the all-solid secondary battery 1 before charging to a volume of the all-solid secondary battery 1 after charging, that is, a volumetric expansion ratio, may be, for example, about 15% or less, about 10% or less, or about 5% or less.

An increase in volume of the negative electrode layer 20 during charging of the all-solid secondary battery 1 is offset by a decrease in volume of the positive electrode layer 10, and the second inactive member 50 receives the change in volume of the negative electrode layer 20, which mitigates a change in volume of the all-solid secondary battery 1 before and after charging.

An energy density per unit volume of the all-solid secondary battery 1 may be in a range of, for example, about 500 Wh/L to about 900 Wh/L, about 500 Wh/L to about 800 Wh/L, or about 500 Wh/L to about 700 Wh/L. The energy density per unit weight of the all-solid secondary battery 1 may be in a range of, for example, about 350 Wh/g to about 600 Wh/g, about 350 Wh/g to about 580 Wh/g, about 350 Wh/g to about 570 Wh/g, or about 350 Wh/g to 550 Wh/g. Because the all-solid secondary battery 1 has an energy density within such ranges, it is possible to provide an increased energy density as compared with a secondary battery of the related art.

### Solid electrolyte layer

### Solid electrolyte layer: solid electrolyte

Referring to FIGS. 1 to 5, the solid electrolyte layer 30 (30a, 30b) includes the solid electrolyte disposed between the positive electrode layer 10 and the negative electrode layer 20. An electrolyte may include, for example, a solid electrolyte, a gel electrolyte, or a combination thereof.

The solid electrolyte may include, for example, a sulfide-based solid electrolyte, an oxide-based solid electrolyte, a polymer solid electrolyte, or a combination thereof.

The solid electrolyte is, for example, the sulfide-based solid electrolyte. The sulfide-based solid electrolyte may be, for example, at least one of (e.g., at least one selected from) Li₂S-P₂S₅, Li₂S-P₂S₅-LiX (wherein X is a halogen), Li₂S-P₂S₅-Li₂O, Li₂S-P₂S₅-Li₂O-Lil, Li₂S-SiS₂, Li₂S-SiS₂-Lil, Li₂S-SiS₂-LiBr, Li₂S-SiS₂-LiCl, Li₂S-SiS₂-B₂S₃-Lil, Li₂S-SiS₂-P₂S₅-Lil, Li₂S-B₂S₃, Li₂S-P₂S₅-ZₘSₙ (wherein m and n are positive numbers and Z are each at least one of (e.g., at least one selected from) Ge, Zn, and/or Ga), Li₂S-GeS₂, Li₂S-SiS₂-Li₃PO₄, Li₂S-SiS₂-LiₚMO_{q} (wherein p and q are positive numbers and M are each at least one of (e.g., at least one selected from) P, Si, Ge, B, Al, Ga, and/or In), Li₇₋ₓPS₆₋ₓC (wherein 0≤x≤2), Li₇₋ₓPS₆₋ₓBrₓ (wherein 0≤x≤2), and/or Li₇₋ₓPS₆₋ₓIₓ (wherein 0≤x≤2). The sulfide-based solid electrolyte is prepared by treating a starting material such as Li₂S or P₂S₅ through a melt quenching method, a mechanical milling method, and/or the like. In one or more embodiments, after such treatment, heat treatment may be performed. The solid electrolyte may be in an amorphous state, a crystalline state, or a mixture state thereof. In one or more embodiments, the solid electrolyte may be, for example, a material that includes at least sulfur (S), phosphorus (P), and lithium (Li) as constituent elements among the above-described sulfide-based solid electrolyte materials. For example, the solid electrolyte may be a material including Li₂S-P₂S₅. In a case of Li₂S-P₂S₅ is included as a sulfide-based solid electrolyte material that forms the solid electrolyte, a mixing molar ratio of Li₂S to P₂S₅, for example, Li₂S:P₂S₅ is in a range of about 20:80 to about 90:10, about 25:75 to about 90:10, about 30:70 to about 70:30, or about 40:60 to about 60:40.

The sulfide-based solid electrolyte may include, for example, an argyrodite-type or kind solid electrolyte represented by Formula 1.

**Formula 1** Li⁺₁₂₋ₙ₋ₓAⁿ⁺X²⁻₆₋ₓY⁻ₓ

In Formula 1, A is P, As, Ge, Ga, Sb, Si, Sn, Al, In, Ti, V, Nb, or Ta, X is S, Se, or Te, Y is Cl, Br, I, F, CN, OCN, SCN, or N₃, 1≤n≤5, and 0≤x≤2. The sulfide-based solid electrolyte may be, for example, an argyrodite-type or kind compound including at least one of (e.g., at least one selected from) Li₇₋ₓPS₆₋ₓClₓ (wherein 0≤x≤2), Li₇₋ₓPS₆₋ₓBrₓ (wherein 0≤x≤2), and/or Li₇₋ₓPS₆₋ₓIₓ (wherein 0≤x≤2). The sulfide-based solid electrolyte may be, for example, an argyrodite-type or kind compound including at least one of (e.g., at least one selected from) Li₆PS₅Cl, Li₆PS₅Br, and/or Li₆PS₅I.

A density of the argyrodite-type or kind solid electrolyte may be in a range of about 1.5 g/cc to about 2.0 g/cc. Because the argyrodite-type or kind solid electrolyte has a density of about 1.5 g/cc or more, it is possible to reduce internal resistance of the all-solid secondary battery 1 and effectively suppress the penetration of Li into the solid electrolyte layer 30.

The oxide-based solid electrolyte may be, for example, Li_{1+x+y}AlₓTi₂₋ₓSi_{y}P_{3-y}O₁₂ (wherein 0<x<2 and 0≤y≤3), BaTiO₃, Pb(Zr,Ti)O₃(PZT), Pb₁₋ₓLaₓZr_{1-y} Ti_{y}O₃(PLZT) (wherein 0≤x<1 and 0≤y<1), Pb(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (wherein 0<x<2 and 0<y<3), LiₓAl_{y}Ti_{z}(PO₄)₃ (wherein 0<x<2, 0<y<1, and 0<z<3), Li_{1+x+y}(Al, Ga)ₓ(Ti, Ge)₂₋ₓSi_{y}P_{3-y}O₁₂ (wherein 0≤x≤1 and 0≤y≤1), LiₓLa_{y}TiO₃ (wherein 0<x<2 and 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (wherein M=Te, Nb, or Zr and 0≤x≤10), or a combination thereof. The oxide-based solid electrolyte is prepared, for example, through a sintering method and/or the like.

The oxide-based solid electrolyte is, for example, a garnet-type or kind solid electrolyte including (*e.g.,* selected from) Li₇La₃Zr₂O₁₂ (LLZO) and/or Li₃₊ₓLa₃Zr₂₋ₐMₐO₁₂ (M-doped LLZO) (wherein M=Ga, W, Nb, Ta, or Al, 0<a<2, and 0≤x≤10).

A polymer solid electrolyte may include, for example, a mixture of a lithium salt and a polymer or a polymer having an ion-conductive functional group. The polymer solid electrolyte may be, for example, a polymer electrolyte in a solid state at a temperature of about 25 °C and a pressure of about 1 atm. The polymer solid electrolyte may not include (e.g., may exclude), for example, a (e.g., any) liquid or be liquid free (e.g., liquid is not a needed component for proper battery operation). The polymer solid electrolyte may include, for example, polyethylene oxide (PEO), polyvinylidene fluoride (PVDF), vinylidene fluoride-hexafluoropropylene (PVDF-HFP), a poly(styrene-b-ethylene oxide) block copolymer (PS-PEO), poly(styrene-butadiene), poly(styrene-isoprene-styrene), an poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyaniline, polyacetylene, Nafion, Aquivion, Flemion, Gore, Aciplex, Morgane ADP, sulfonated poly(ether ketone), SPEEK), sulfonated poly(arylene ether ketone sulfone) (SPAEKKS), sulfonated poly(aryl ether ketone (SPAEK), poly[bis(benzimidazobenzisoquinolinones)] (SPBIBI), lithium 9,10-diphenylanthracene-2-sulfonate, DPASLi+, or a combination thereof, but the present disclosure is not limited thereto. Any material utilized as a polymer electrolyte in the art may be utilized. As the lithium salt, any material usable as a lithium salt in the art may be utilized. The lithium salt may include, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (wherein x and y are each from 1 to 20), LiCl, Lil, or a mixture thereof. The polymer included in the polymer solid electrolyte may be, for example, a compound including 10 or more, 20 or more, 50 or more, or 100 or more repeating units. The polymer included in the polymer solid electrolyte may have, for example, a weight average molecular weight of 1,000 Daltons or more, 10,000 Daltons or more, 100,000 Daltons or more, or 1,000,000 Daltons or more.

A gel electrolyte may be, for example, a polymer gel electrolyte. The gel electrolyte may have a gel state without including, for example, a polymer.

The polymer gel electrolyte may include, for example, a liquid electrolyte and a polymer or may include an organic solvent and a polymer having an ion-conductive functional group. The polymer gel electrolyte may be, for example, a polymer gel electrolyte in a gel state at a temperature of about 25 °C and a pressure of about 1 atm. The polymer gel electrolyte may have, for example, a gel state without including a liquid. The liquid electrolyte utilized in the polymer gel electrolyte may include, for example, a mixture of an ionic liquid, a lithium salt, and an organic solvent, a mixture of a lithium salt and an organic solvent, a mixture of an ionic liquid and an organic solvent, or a mixture of a lithium salt, an ionic liquid, and an organic solvent. The polymer utilized in the polymer gel electrolyte may be (*e.g.,* may be selected from) polymers utilized in the solid polymer electrolyte. The organic solvent may be (*e.g.,* may be selected from) organic solvents utilized in the liquid electrolyte. The lithium salt may be (*e.g.,* may be selected from) lithium salts utilized in the polymer solid electrolyte. The ionic liquid may have a melting point below room temperature, may include only ions, and may refer to a salt in a liquid state at room temperature or a molten salt at room temperature. The ionic liquid may include, for example, at least one of (*e.g.,* at least one selected from) compounds including a) at least one cation of (*e.g.,* at least one cation selected from) an ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based cations, and/or a mixture thereof, and b) at least one anion of (*e.g.,* at least one anion selected from) BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br, I⁻, SO₄⁻, CF₃SO₃⁻, (FSO₂)₂N⁻, (C₂F₅SO₂)₂N-, (C₂F₅SO₂)(CF₃SO₂)N⁻, and (CF₃SO₂)₂N⁻. For example, the polymer solid electrolyte may be impregnated in a liquid electrolyte in a secondary battery to form a polymer gel electrolyte. The polymer gel electrolyte may further include inorganic particles. A polymer included in the polymer gel electrolyte may be, for example, a compound including 10 or more, 20 or more, 50 or more, or 100 or more repeating units. The polymer included in the polymer gel electrolyte may have, for example, a weight average molecular weight of 500 Daltons or more, 1,000 Daltons or more, 10,000 Daltons or more, 100,000 Daltons or more, or 1,000,000 Daltons or more.

The solid electrolyte layer 30 may be impermeable to lithium polysulfide. Accordingly, it is possible to prevent or reduce a side reaction between lithium polysulfide which generates during charging/discharging of a sulfide-based positive electrode active material and the negative electrode layer 20. Accordingly, it is possible to improve the cycle characteristics of the all-solid secondary battery 1 including the solid electrolyte layer 30.

### Solid electrolyte layer: binder

The solid electrolyte layer 30 may include, for example, a binder. The binder included in the solid electrolyte layer 30 is, for example, SBR, polytetrafluoroethylene, polyvinylidene fluoride, polyethylene, and/or the like but the present disclosure is not limited thereto. Any material utilized as a binder in the art may be utilized. The binder of the solid electrolyte layer 30 may be the same as or different from the binder included in the positive electrode active material layer 12 and the negative electrode active material layer 22. The binder may not be provided.

A content (e.g., amount) of the binder included in the solid electrolyte layer 30 is in a range of about 0.1 wt% to about 10 wt%, about 0.1 wt% to about 5 wt%, about 0.1 wt% to about 3 wt%, about 0.1 wt% to about 1 wt%, about 0 wt% to about 0.5 wt%, or about 0 wt% to about 0.1 wt% with respect to the total weight of the solid electrolyte layer 30.

The present disclosure will be described in more detail through the following Examples and Comparative Examples. However, Examples are for illustrative purposes only, and the scope of the present disclosure is not limited by Examples.

### Example 1: Mono-cell all-solid secondary battery, sulfide-based positive electrode active material (Li₂S-CNF composite), and first inactive member having flame retardancy

### Preparation of negative electrode layer

A 10 µm-thick SUS foil was prepared as a negative electrode current collector. In addition, CB having a primary particle diameter of about 30 nm and silver (Ag) particles having an average particle diameter of about 60 nm were prepared as negative electrode active materials.

4g of a mixed powder in which CB and silver (Ag) particles were mixed in a weight ratio of 3:1 was introduced into a container, and 4 g of an N-methyl-2-pyrrolidone (NMP) solution including 7 wt% of a PVDF binder (# 9300 manufactured by Kureha Corporation) was added thereto, thereby preparing a mixed solution. Next, while NMP was little by little added to the mixed solution, the mixed solution was stirred, thereby preparing a slurry. The prepared slurry was applied on a SUS sheet utilizing a bar coater and dried in air at a temperature of 80 °C for 10 minutes. Thus, an obtained stack was vacuum-dried at a temperature of 40 °C for 10 hours. The dried stack was pressed through a cold roll press at a pressure of 5 tonf/cm² and a speed of 5 m/sec to flatten a surface of a first negative electrode active material layer of the stack. A negative electrode layer was prepared through such a process. A thickness of a first negative electrode active material layer included in the negative electrode layer was about 15 µm. An area of the first negative electrode active material layer was the same as an area of a negative electrode current collector. An initial charge capacity of the negative electrode was measured by the half-cell as described above. An initial charge capacity of the first negative electrode active material layer was 2.3 mAh.

### Preparation of positive electrode layer

A Li₂S-CNF composite was prepared as a positive electrode active material. The Li₂S-CNF composite was prepared according to a method disclosed in Eom et al., *High performance all-solid-state lithium-sulfur battery using a Li₂S-VGCF nanocomposite,* Electrochimica Acta, March 10, 2017, Vol. 230, pp. 279-284 (the entire content of which is hereby incorporated by reference), except that a vapor grown carbon fiber (VGCF) was changed into CNFs. Li₆PS₅Cl (D50=3.0 um, crystalline) which was an argyrodite-type or kind crystal was prepared as a solid electrolyte. KB was prepared as a conductive agent. Such materials were mixed such that a weight ratio of the positive electrode active material, the solid electrolyte, and the conductive agent was 40:50:10, thereby preparing a positive electrode mixture. The positive electrode mixture was obtained through dry mixing utilizing a ball mill. The positive electrode mixture obtained through the ball milling formed an ion-conductive and electron-conductive network.

The positive electrode mixture was disposed on one surface of a positive electrode current collector made of an aluminum foil or SUS (stainless steel) having one surface coated with carbon and was plate-pressed at a pressure of 200 MPa for 10 minutes, thereby preparing a positive electrode layer. A thickness of the positive electrode layer was about 120 µm. A thickness of a positive electrode active material layer was about 100 µm, and a thickness of the aluminum foil coated with carbon was about 20 µm. An area of the positive electrode active material layer was the same as an area of the positive electrode current collector. An initial charge capacity of the positive electrode was measured by the half-cell as described above. An initial charge capacity of the positive electrode active material layer was 25 mAh. For Example 1, a ratio (B/A) of initial charge capacity (B) of the first negative electrode active material layer to initial charge capacity (A) of the positive electrode active material layer was about 0.09. The initial charge capacity of the positive electrode active material layer determined by charging from a first open circuit voltage to a maximum charging voltage of 2.8 V vs. Li/Li+. Further, the initial charge capacity of the first negative electrode active material layer determined by charging from a second open circuit voltage to 0.01 V vs. Li/Li+. For Examples 2 to 8 and Comparative Example 1, a ratio (B/A) of initial charge capacity (B) of the first negative electrode active material layer to initial charge capacity (A) of the positive electrode active material layer was 0.07 to 0.09 at the same measuring condition with Example 1 respectively. In Examples 7 and 8, a half of an initial charge capacity of the positive electrode active material layer was used for calculation of a ratio (B/A) since a positive electrode active material layer was disposed on both (e.g., opposite) surfaces of a positive electrode current collector.

### Preparation of solid electrolyte layer

A mixture was prepared by adding 1.5 parts by weight of an acrylic-based binder with respect to 98.5 parts by weight of a solid electrolyte to a Li₆PS₅Cl solid electrolyte (D50=3.0 µm, crystalline) which was an argyrodite-type or kind crystal. Octyl acetate was added to the prepared mixture and stirred to prepare a slurry. The prepared slurry was applied on a 15 µm-thick nonwoven fabric placed on a 75 µm-thick polyethylene terephthalate (PET) substrate utilizing a bar coater and was dried in air at a temperature of 80 °C for 10 minutes, thereby obtaining a stack. The obtained stack was vacuum-dried at a temperature of 80 °C for 2 hours. A solid electrolyte layer was prepared through such a process.

### Flame-retardant inactive member

A slurry, which was a mixture of a pulp fiber (cellulose fiber), a glass fiber, aluminum hydroxide (Al(OH)₃), an acrylic-based binder, and a solvent, was shaped into a gasket form, and the solvent was removed to prepare a flame-retardant inactive member.

A weight ratio of the pulp fiber (cellulose fiber), the glass fiber, the aluminum hydroxide (Al(OH)₃), and the acrylic-based binder was 20:8:70:2. A thickness of the flame-retardant inactive member was about 120 µm.

Before the prepared flame-retardant inactive member was disposed on the solid electrolyte layer, vacuum heat treatment was performed thereon at a temperature of 80 °C for 5 hours to remove moisture and/or the like from the flame-retardant inactive member.

### Manufacturing of all-solid secondary battery

Referring to FIG. 1, the solid electrolyte layer was disposed on the negative electrode layer such that the first negative electrode active material layer was in contact with the solid electrolyte layer, and the positive electrode layer was disposed on the solid electrolyte layer. A gasket, which was around (*e.g.,* surrounded) the positive electrode layer and was in contact with the solid electrolyte layer, was disposed around the positive electrode layer to prepare a stack. A thickness of the gasket was about 120 µm. The flame-retardant inactive member was utilized as the gasket. The gasket was disposed in contact with a side surface of the positive electrode layer and the solid electrolyte layer. The positive electrode layer was disposed at a central portion of the solid electrolyte layer, and the gasket was disposed to be around (*e.g.,* surround) the positive electrode layer and extend to an end portion of the solid electrolyte layer. An area of the positive electrode layer was about 90% of an area of the solid electrolyte layer, and the gasket was disposed in the entirety of the remaining area of 10 % of the solid electrolyte layer on which the positive electrode layer was not disposed.

The prepared stack was plate-pressed at a temperature 85 °C and a pressure of 500 MPa for 30 min. The solid electrolyte layer is sintered through such press treatment, and thus battery characteristics are improved. A thickness of the sintered solid electrolyte layer was about 45 µm. A density of the Li₆PS₅Cl solid electrolyte, which was the argyrodite-type or kind crystal and was included in the sintered solid electrolyte layer, was 1.6 g/cc. The area of the solid electrolyte layer was the same as an area of the negative electrode layer.

The pressed stack was introduced into a pouch and vacuum-sealed to manufacture an all-solid secondary battery. Portions of the positive electrode current collector and the negative electrode current collector extended to the outside of the sealed all-solid secondary battery and were utilized as a positive electrode layer terminal and a negative electrode layer terminal.

### Example 2: Sulfide-based positive electrode active material (Li₂S-CNF composite), first inactive member having flame retardancy, and second inactive member having conductivity and flame retardancy

An all-solid secondary battery was manufactured in substantially the same manner as in Example 1, except that, before a pressed stack was introduced into a pouch, a conductive flame-retardant member, which was in the form of a sheet having the same area and shape as the stack, was additionally disposed on a negative electrode current collector of the pressed stack and was vacuum-sealed to manufacture the all-solid secondary battery. A conductive flame-retardant inactive member sheet was prepared through the following method. The conductive flame-retardant inactive member sheet may serve as an elastic sheet.

### Conductive flame-retardant inactive member

A slurry, which was a mixture of a pulp fiber (cellulose fiber), a glass fiber, aluminum hydroxide (Al(OH)₃), an acrylic-based binder, a conductive material (Denka black), and a solvent, was formed into a sheet form and then dried to prepare a flame-retardant inactive member. A weight ratio of the pulp fiber (cellulose fiber), the glass fiber, the aluminum hydroxide (Al(OH)₃), the acrylic-based binder, and the conductive material was 20:8:50:2:20. A thickness of the flame-retardant inactive member was about 120 µm. Before the prepared flame-retardant inactive member was disposed on the negative electrode current collector, vacuum heat treatment was performed thereon at a temperature of 80 °C for 5 hours to remove moisture and/or the like from the flame-retardant inactive member.

### Example 3: Sulfide-based positive electrode active material (Li₂S-CNF composite) and first inactive member having non-flame retardancy

An all-solid secondary battery was manufactured in substantially the same manner as in Example 1, except that a flame-retardant inactive member was changed into a non-flame-retardant inactive member.

The non-flame-retardant inactive member included a pulp fiber and an acrylic-based binder in a weight ratio of 98:2 and did not include a glass fiber and Al(OH)₃. A thickness of the non-flame-retardant inactive member was about 120 µm.

### Example 4: Sulfide-based positive electrode active material (Li₂S-C-Li₆PS₅Cl composite) and first inactive member having flame retardancy

An all-solid secondary battery was manufactured in substantially the same manner as in Example 1, except that a Li₂S-C-Li₆PS₅Cl composite was utilized as a positive electrode active material instead of a Li₂S-CNF composite.

The Li₂S-C-Li₆PS₅Cl composite was prepared according to a method disclosed in Han et al., High-Performance All-Solid-State Lithium-Sulfur Battery Enabled by a Mixed-Conductive Li2S Nanocomposite, Nano Lett., July 13, 2016, Vol. 16, Is. 7, pp. 4521-4527 (the entire content of which is hereby incorporated by reference).

### Example 5: Sulfide-based positive electrode active material (Li₂S-CNF composite), first negative electrode active material layer (Ag-supported carbon), flame-retardant first inactive member, and conductive flame-retardant second inactive member

An all-solid secondary battery was manufactured in substantially the same manner as in Example 2, except that the following carbon black on which silver particles were supported was utilized as a negative electrode active material instead of a mixture of carbon black and silver particles.

### Preparation of silver particle-supported carbon black

Carbon black was dispersed in a 1.0 M solution of a sulfuric acid, stirred for 2 hours, filtered and dried to prepare acid-treated carbon black.

10 g of the acid-treated carbon black was introduced into a mixed solvent of 1,500 g of distilled water, 1,500 g of ethanol, and 30 g of glycerol and stirred, and then 2 g of AgNOs was introduced and stirred to prepare a mixed solution. Carbon black had a particle diameter of 80 nm. A reducing agent was introduced into the mixed solution to reduce and support silver ions on the carbon black. The carbon black on which silver-containing particles were supported was filtered, cleaned, and dried to prepare a composite negative electrode active material. Per scanning electron microscope and X-ray photoelectron spectroscopy (XPS) measurement results, it was confirmed that a plurality of silver-containing particles were supported on carbon black particles. The silver-containing particles included silver particles, silver oxide (Ag₂O) particles, and composite particles of silver (Ag) and silver oxide (Ag₂O). A content (e.g., amount) of the silver-containing particles included in a composite negative electrode active material was 5 wt%. The silver particles had an average particle diameter of 10 nm.

### Example 6: Sulfide-based positive electrode active material (Li₂S-C-Lil composite), flame-retardant first inactive member

An all-solid secondary battery was manufactured in substantially the same manner as in Example 1, except that a Li₂S-C-LiI composite was utilized as a positive electrode active material instead of a Li₂S-CNF composite.

A Li₂S-C-LiI composite was prepared according to a method disclosed in Nano Lett. 2016, 16, 7, 4521-4527, except that Li₆PS₅Cl was changed into Lil.

### Comparative Example 1: Sulfide-based positive electrode active material and non-use of inactive member (free of inactive member)

An all-solid secondary battery was manufactured in substantially the same manner as in Example 1, except that a flame-retardant inactive member (that is, a gasket) was not utilized when the all-solid secondary battery was manufactured.

### Comparative Example 2: Oxide-based positive electrode active material and first inactive member having flame retardancy

An all-solid secondary battery was manufactured in substantially the same manner as in Example 1, except that a positive electrode including lithium transition metal oxide was utilized instead of a positive electrode including a Li₂S positive electrode active material. For Comparative Example 2, a ratio (B/A) of initial charge capacity (B) of the first negative electrode active material layer to initial charge capacity (A) of the positive electrode active material layer was about 0.09. The initial charge capacity of the positive electrode active material layer was determined by charging from a first open circuit voltage to a maximum charging voltage of 4.25 V vs. Li/Li+. Further, the initial charge capacity of the first negative electrode active material layer was determined by charging from a second open circuit voltage to 0.01 V vs. Li/Li+.

The positive electrode including the lithium transition metal oxide was provided through the following method.

### Preparation of positive electrode layer

LiNi_{0.8}Co_{0.15}Al_{0.05}O₂ (NCA) coated with Li₂O-ZrO₂ (LZO) was prepared as a positive electrode active material. The positive electrode active material coated with LZO was prepared according to a method disclosed in Korean Patent Publication No. 10-2016-0064942 to Aihara et al., published on June 8, 2016 (the entire content of which is hereby incorporated by reference). Li₆PS₅Cl (D50=0.5 um, crystalline) which was an argyrodite-type or kind crystal was prepared as a solid electrolyte. A polytetrafluoroethylene (PTFE) binder (Teflon binder manufactured by DuPont) was prepared as a binder. CNFs were prepared as a conductive agent. A mixture, in which such materials were mixed into a xylene solvent such that a weight ratio of the positive electrode active material, the solid electrolyte, the conductive agent, and the binder was 84:11.5:3:1.5, was shaped into a sheet form and then dried at a temperature of 40 °C for 8 hours to prepare a positive electrode sheet. The positive electrode sheet was disposed on one surface of a positive electrode current collector made of an aluminum foil having one surface coated with carbon and was plate-pressed at a pressure of 200 MPa for 10 minutes, thereby preparing a positive electrode layer. A thickness of the positive electrode layer was about 120 µm. A thickness of a positive electrode active material layer was about 100 µm, and a thickness of the aluminum foil coated with carbon was about 20 µm. An area of the positive electrode active material layer was the same as an area of the positive electrode current collector.

### Example 7: One bi-cell all-solid secondary battery, sulfide-based positive electrode active material (Li₂S-CNF composite), and first inactive member having flame retardancy

### Manufacturing of bi-cell all-solid secondary battery

A positive electrode layer was prepared in substantially the same manner as in Example 1, except that a positive electrode active material layer was prepared to be disposed on both (e.g., opposite) surfaces of a positive electrode current collector.

An entire thickness of the positive electrode layer was about 220 µm. A thickness of the positive electrode active material layer was about 100 µm, and a thickness of an aluminum foil coated with carbon was about 20 µm.

Two negative electrode layers, two solid electrolyte layers, and two flame-retardant inactive members were prepared in substantially the same manner as in Example 1.

Referring to FIG. 3, the solid electrolyte layer was disposed on the negative electrode layer such that a first negative electrode active material layer was in contact with the solid electrolyte layer, and the positive electrode layer was disposed on the solid electrolyte layer. The positive electrode layer had a structure in which the positive electrode active material layer was disposed on each of the surfaces of the positive electrode current collector. A gasket was disposed around the positive electrode layer to be around (*e.g.,* surround) the positive electrode layer and be in contact with the solid electrolyte layer. A thickness of the gasket was about 220 µm. The gasket may have, for example, a structure in which two gaskets having a thickness of 110 µm are stacked or one gasket having a thickness of 220 µm is provided. The flame-retardant inactive member was utilized as the gasket.

The gasket was disposed in contact with a side surface of the positive electrode layer and the solid electrolyte layer. The positive electrode layer was disposed at a central portion of the solid electrolyte layer, and the gasket was disposed to be around (*e.g.,* surround) the positive electrode layer and extend to an end portion of the solid electrolyte layer. An area of the positive electrode layer was about 90% of an area of the solid electrolyte layer, and the gasket was disposed in the entirety of the remaining area of 10 % of the solid electrolyte layer on which the positive electrode layer was not disposed. The solid electrolyte layer was disposed on the positive electrode layer and the gasket, and the negative electrode layer was disposed on the solid electrolyte layer, thereby preparing a stack.

The prepared stack was plate-pressed at a temperature of 85 °C and a pressure of 500 MPa for 30 min. The solid electrolyte layer is sintered through such press treatment, and battery characteristics are improved. A thickness of the one sintered solid electrolyte layer was about 45 µm. A density of a Li₆PS₅Cl solid electrolyte, which was an argyrodite-type or kind crystal and was included in the sintered solid electrolyte layer, was 1.6 g/cc. The area of the solid electrolyte layer was the same as an area of the negative electrode layer.

The pressed stack was introduced into a pouch and vacuum-sealed to manufacture an all-solid secondary battery. Portions of the positive electrode current collector and the negative electrode current collector extended to the outside of the sealed battery and were utilized as a positive electrode layer terminal and a negative electrode layer terminal.

### Example 8: Sulfide-based positive electrode active material (Li₂S-CNF composite), first inactive member having flame retardancy, and second inactive member having conductivity and flame retardancy

An all-solid secondary battery was manufactured in substantially the same manner as in Example 7, except that, before a pressed stack was introduced into a pouch, a conductive flame-retardant inactive member, which was in the form of a sheet having the same area and shape as the stack, was additionally disposed on one surface of the pressed stack and the other surface opposite to the one surface and was vacuum-sealed to manufacture the all-solid secondary battery. The conductive flame-retardant inactive member was prepared in substantially the same manner as in Example 2.

### Evaluation Example 1: Calculation of volume change rate during charging of all-solid secondary battery

From an initial first volume of a first all-solid secondary battery having a structure of [Al current collector (10 µm)/LiNi_{0.8}Co_{0.15}Al_{0.05}O₂ (NCA) positive electrode active material layer (100 µm)/Li₆PS₅Cl solid electrolyte layer (32 µm)/first negative electrode active material layer (7 µm)/SUS current collector (10 µm)] and a second volume after charging of the first all-solid secondary battery in which a lithium metal layer having a thickness of 30 µm was precipitated between a first negative electrode active material layer and a SUS current collector through charging, a change in volume of the first all-solid secondary battery during charging was calculated and shown in Table 1. It was assumed that there was no change in thickness of an NCA positive electrode active material layer before and after charging.

From an initial first volume of a second all-solid secondary battery having a structure of [Al current collector (10 µm)/Li₂S (60 wt%)-carbon (40 wt%) positive electrode active material layer (50 µm)/Li₆PS₅Cl solid electrolyte layer (32 µm)/first negative electrode active material layer (7µm)/SUS current collector (10 µm)] and a second volume after charging of the second all-solid secondary battery in which a lithium metal layer having a thickness of 30 µm was precipitated between a first negative electrode active material layer and a SUS current collector through charging, a change in volume of the second all-solid secondary battery during charging was calculated and shown in Table 1. It was assumed that a thickness of Li₂S (60 wt%)-carbon (40 wt%) after charging was decreased from 50 µm to 35 µm, that is, by 15 µm. It was assumed that all lithium included in Li₂S moved to a negative electrode. It was assumed that a positive electrode active material layer of the second all-solid secondary battery was made of only Li₂S and carbon. It was assumed that a positive electrode active material layer of the first all-solid secondary battery was made of NCA.

**Table 1**

| | Initial cell thickness [µm] | Change in thickness [µm] | Volumetric expansion ratio [%] |
|---|---|---|---|
| First all-solid secondary battery (NCA positive electrode) | 159 | 30 | 18.9 |
| Second all-solid secondary battery (Li₂S positive electrode) | 109 | 15 | 13.9 |

As shown in Table 1, in the second all-solid secondary battery including the positive electrode active material layer that included Li₂S, a volume of a negative electrode layer was increased due to the precipitation of the lithium metal layer, but a volume of the positive electrode active material layer was decreased to suppress or reduce an increase in overall volume of the second all-solid secondary battery. On the other hand, in the first all-solid secondary battery including the positive electrode active material layer that included lithium transition metal oxide, because a change in volume of the positive electrode active material layer was insignificant, an overall volume of the first all-solid secondary battery was considerably increased due to the precipitation of the lithium metal layer.

Therefore, it was confirmed that, in the second all-solid secondary battery, a change in volume occurring during charging/discharging of the second all-solid secondary battery was decreased in comparison with a change in volume occurring during charging/discharging of the first all-solid secondary battery, thereby effectively preventing or reducing deterioration due to cracks and/or the like of the second all-solid secondary battery.

### Evaluation Example 2: Charge/discharge test

The charge/discharge characteristics of the all-solid secondary batteries manufactured in Examples 1 to 8 and Comparative Example 1 were evaluated through the following charge/discharge test. The all-solid secondary batteries were introduced into a constant-temperature tank having a temperature of 45 °C to perform the charge/discharge test.

In a first cycle, the all-solid secondary batteries were charged at a constant current of 0.1 C for 12.5 hours until a battery voltage reached a range of 2.5 V to 2.8 V. Subsequently, the all-solid secondary batteries were discharged at a constant current of 0.1 C for 12.5 hours until the battery voltage reached 0.5 V.

In a second cycle, the all-solid secondary batteries were charged at a constant current of 0.33 C for 12.5 hours until the battery voltage reached a range of 2.5 V to 2.8 V. Subsequently, the all-solid secondary batteries were discharged at a constant current of 0.33 C for 12.5 hours until the battery voltage reached 0.5 V.

In a third cycle, the all-solid secondary batteries were charged at a constant current of 1.0 C for 12.5 hours until the battery voltage reached a range of 2.5 V to 2.8 V. Subsequently, the all-solid secondary batteries were discharged at a constant current of 1.0 C for 12.5 hours until the battery voltage reached 0.5 V.

The charge/discharge characteristics of the all-solid secondary battery manufactured in Comparative Example 2 were evaluated through the following charge/discharge test. The all-solid secondary battery was introduced into a constant-temperature tank having a temperature of 45 °C to perform the charge/discharge test.

In a first cycle, the all-solid secondary battery was charged at a constant current of 0.1 C for 12.5 hours until a battery voltage was reached a range of 3.9 V to 4.25 V. Subsequently, the all-solid secondary battery was discharged at a constant current of 0.1 C for 12.5 hours until the battery voltage reached 2.5 V.

In a second cycle, the all-solid secondary battery was charged at a constant current of 0.33 C for 12.5 hours until the battery voltage reached a range of 3.9 V to 4.25 V. Subsequently, the all-solid secondary battery was discharged at a constant current of 0.33 C for 12.5 hours until the battery voltage reached 2.5 V.

In a third cycle, the all-solid secondary battery was charged at a constant current of 1.0 C for 12.5 hours until the battery voltage was reached a range of 3.9 V to 4.25 V. Subsequently, the all-solid secondary battery was discharged at a constant current of 1.0 C for 12.5 hours until the battery voltage reached 2.5 V.

In a charging/discharging process up to the third cycle, whether a short circuit occurs, initial discharge capacity, and high-rate characteristics are shown in Table 2.

When a short circuit occurs before the first cycle is completed, whether the short circuit occurs is denoted by o, when a short circuit occurs in the second cycle, whether the short circuit occurs is denoted by △, and when a short circuit does not occur by a time point at which the third cycle is completed, whether the short circuit occurs is denoted by × (e.g., no short circuit).

**Table 2**

| | Short circuit |
|---|---|
| Example 1 (mono-cell/Li₂S-C composite/flame-retardant positive electrode gasket) | × |
| Example 2 (mono-cell/Li₂S-C composite/flame-retardant positive electrode gasket/Ag+C mixture/negative electrode sheet) | × |
| Example 3 (mono-cell/Li₂S-C composite/non-flame-retardant positive electrode gasket) | × |
| Example 4 (mono-cell/Li₂S-C-Li₆PS₅Cl composite/flame-retardant positive electrode gasket) | × |
| Example 5 (mono-cell/Li₂S-C-Composite/flame-retardant positive electrode gasket/Ag-supported C/negative electrode sheet) | × |
| Example 6 (mono-cell/Li₂S-C-LiI composite/flame-retardant positive electrode gasket) | × |
| Example 7 (bi-cell/Li₂S-C composite/flame-retardant positive electrode gasket) | × |
| Example 8 (bi-cell/Li₂S-C composite/flame-retardant positive electrode gasket/negative electrode sheet) | × |
| Comparative Example 1 (mono-cell/Li₂S-C composite/-) | ○ |
| Comparative Example 2 (mono-cell/NCA/flame-retardant positive electrode gasket) | × |

As shown in Table 2, the all-solid secondary batteries of Examples 1 to 8 exhibited improved cycle characteristics as compared with the all-solid secondary battery of Comparative Example 1.

### Evaluation Example 3: High-temperature lifespan characteristics test

The charge/discharge characteristics of the all-solid secondary batteries manufactured in Examples 1 to 8 and Comparative Example 1 were evaluated through the following charge/discharge test. The all-solid secondary batteries were introduced into a constant-temperature tank having a temperature of 45 °C to perform the charge/discharge test.

In a first cycle, the all-solid secondary batteries were charged at a constant current of 0.6 mA/cm² for 12.5 hours until a battery voltage reached a range of 2.5 V to 2.8 V. Subsequently, the all-solid secondary batteries were discharged at a constant current of 0.6 mA/cm² for 12.5 hours until the battery voltage reached 0.5 V.

The charge/discharge characteristics of the all-solid secondary battery manufactured in Comparative Example 2 were evaluated through the following charge/discharge test. The all-solid secondary battery was introduced into a constant-temperature tank having a temperature of 45 °C to perform the charge/discharge test.

In a first cycle, the all-solid secondary battery was charged at a constant current of 0.6 mA/cm² for 12.5 hours until a battery voltage reached a range of 3.9 V to 4.25 V. Subsequently, the all-solid secondary battery was discharged at a constant current of 0.6 mA/cm² for 12.5 hours until the battery voltage reached 2.5 V.

Discharge capacity of the first cycle was taken as standard capacity. From the second cycle, charging and discharging were performed up to 150 cycles under the same conditions as the first cycle. Measurement results are shown in Table 3.

As the number of cycles required for discharge capacity to decrease to 95% of the standard capacity from the second cycle increased, it was regarded to have excellent or suitable lifespan characteristics.

In the all-solid secondary battery of Comparative Example 1, a short circuit occurred before the first cycle was completed, and thus lifespan characteristics could not be measured.

**Table 3**

| | Number of cycles [Times] |
|---|---|
| Example 1 (mono-cell/Li₂S-C composite/flame-retardant positive electrode gasket) | 301 |
| Example 2 (mono-cell/Li₂S-C composite/flame-retardant positive electrode gasket/Ag+C mixture/negative electrode sheet) | 415 |
| Example 3 (mono-cell/Li₂S-C composite/non-flame-retardant positive electrode gasket) | 220 |
| Example 4 (mono-cell/Li₂S-C-Li₆PS₅Cl composite/flame-retardant positive electrode gasket) | 302 |
| Example 5 (mono-cell/Li₂S-C-Composite/flame-retardant positive electrode gasket/Ag-supported C/negative electrode sheet) | 580 |
| Example 6 (mono-cell/Li₂S-C-LiI composite/flame-retardant positive electrode gasket) | 820 |
| Example 7 (bi-cell/Li₂S-C composite/flame-retardant positive electrode gasket) | 450 |
| Example 8 (bi-cell/Li₂S-C composite/flame-retardant positive electrode gasket/negative electrode sheet) | 510 |
| Comparative Example 1 (mono-cell/Li₂S-C composite/-) | Unmeasurable |
| Comparative Example 2 (mono-cell/NCA/flame-retardant positive electrode gasket) | 200 |

As shown in Table 3, the lifespan characteristics of the all-solid secondary batteries of Examples 1 to 8 were improved as compared with the all-solid secondary battery of Comparative Example 2.

Because the all-solid secondary battery of Example 6 includes the Li₂S-C-LiI composite as a positive electrode active material, the lifespan characteristics thereof are further improved as compared with Example 1 including a Li₂S-C composite and Example 4 including a Li₂S-C-Li₆PS₅Cl composite.

It was determined that, due to a decrease in change in volume during charging/discharging, the lifespan characteristics of the all-solid secondary batteries of Examples 1 to 8 including Li₂S were improved as compared with the all-solid secondary battery of Comparative Example 2 including an oxide-based positive electrode active material.

It was determined that, because the all-solid secondary batteries of Examples 7 and 8 had a bi-cell structure in which components were symmetrically disposed, a change in volume during charging/discharging was effectively decreased, and thus the all-solid secondary batteries of Examples 7 and 8 had improved lifespan characteristics as compared with the all-solid secondary batteries of Examples 1 to 4 having a mono-cell structure.

It was determined that the all-solid secondary batteries of Examples 1, 2, and 4 included a flame-retardant inactive member and thus had improved lifespan characteristics as compared with Example 3 including a non-flame-retardant inactive member.

It was determined that a second inactive member was additionally disposed on a negative electrode current collector to effectively relieve stress of the negative electrode layer on which a change in volume was concentrated, and thus the all-solid secondary battery of Example 8 had improved lifespan characteristics as compared with the all-solid secondary battery of Example 7. It was determined that the all-solid secondary battery of Example 2 had improved lifespan characteristics as compared with Examples 1, 3, and 4 for the same reason. By utilizing silver particle-supported carbon, the all-solid secondary battery of Example 5 was determined to have improved lifespan characteristics as compared with that of Example 2 which included a simple mixture of silver particles and carbon particles.

As described above, the all-solid secondary battery according to the present embodiments may be applied to one or more suitable portable devices or vehicles.

While embodiments have been described in more detail with reference to the accompanying drawings, the present disclosure is not limited to the illustrated embodiments.

According to one aspect of the embodiments of the present disclosure, according to an all-solid secondary battery having a novel structure, it is possible to provide an all-solid secondary battery in which a short circuit is suppressed or reduced and cycle characteristics are improved.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

As used herein, "/" may be interpreted as "and," or as "or" depending on the context.

Further, the use of "may" when describing embodiments of the present disclosure refers to "one or more embodiments of the present disclosure."

The portable device, vehicle, and/or the battery, e.g., a battery controller, and/or any other relevant devices or components according to embodiments of the present disclosure described herein may be implemented utilizing any suitable hardware, firmware (*e.g.,* an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes and modifications in form and details may be made by one or ordinary skill in the art without departing from the scope of the disclosure as defined by the following claims and equivalents thereof.

## Claims

1. An all-solid secondary battery comprising:
a positive electrode layer;
a negative electrode layer;
a solid electrolyte layer between the positive electrode layer and the negative electrode layer; and
a first inactive member on a side surface of the positive electrode layer,
wherein the positive electrode layer comprises a positive electrode current collector and a positive electrode active material layer on one surface or opposite surfaces of the positive electrode current collector,
the positive electrode active material layer comprises a lithium-containing sulfide-based positive electrode active material, and
the lithium-containing sulfide-based positive electrode active material comprises Li₂S, a Li₂S-containing composite, or a combination thereof,
wherein the negative electrode layer comprises a negative electrode current collector and a first negative electrode active material layer on one surface of the negative electrode current collector,
a ratio (B/A) of an initial charge capacity (B) of the first negative electrode active material layer to an initial charge capacity (A) of the positive electrode active material layer is in a range of about 0.005 to about 0.45,
the initial charge capacity of the positive electrode active material layer is determined by charging from a first open circuit voltage to a maximum charging voltage vs. Li/Li⁺, and
the initial charge capacity of the first negative electrode active material layer is determined by charging from a first open circuit voltage to a voltage of about 0.01 V vs. Li/Li⁺.

2. The all-solid secondary battery of claim 1, wherein the lithium-containing sulfide-based positive electrode active material comprises the Li₂S-containing composite and the Li₂S-containing composite comprises a composite of Li₂S and carbon; a composite of Li₂S, carbon, and a solid electrolyte; a composite of Li₂S and a solid electrolyte; a composite of Li₂S, carbon, and a lithium salt; a composite of Li₂S and a lithium salt; a composite of Li₂S and metal carbide; a composite of Li₂S, carbon, and metal carbide; a composite of Li₂S and metal nitride; a composite of Li₂S, carbon, and metal nitride; or a combination thereof.

3. The all-solid secondary battery of claim 1 or claim 2, wherein:
(i) the positive electrode active material layer further comprises FeS₂, VS₂, NaS, MnS, FeS, NiS, CuS, or a combination thereof; and/or
(ii) the positive electrode active material layer further comprises at least one selected from a solid electrolyte, a conductive material, and a binder, and the solid electrolyte comprises a sulfide-based solid electrolyte, and the conductive material comprises carbon-based conductive material.

4. The all-solid secondary battery of any one of claims 1 to 3, wherein the first inactive member is around a side surface of the positive electrode layer and is in contact with the solid electrolyte layer,
the first inactive member extends from the side surface of the positive electrode layer to an end portion of the solid electrolyte layer along a surface of the solid electrolyte layer,
an area of the positive electrode layer in contact with the solid electrolyte layer is smaller than an area of the solid electrolyte layer facing the positive electrode layer, and
the first inactive member is around a side surface of the positive electrode layer and to compensate for a difference between the area of the positive electrode layer in contact with the solid electrolyte layer and the area of the solid electrolyte layer facing the positive electrode layer.

5. The all-solid secondary battery of any one of claims 1 to 4, wherein a thickness of the first inactive member is greater than a thickness of the first negative electrode active material layer,
the thickness of the first negative electrode active material layer is about 50% or less of the thickness of the first inactive member, and
the negative electrode current collector is free of the first negative electrode active material layer on a surface opposite the one surface of the negative electrode current collector.

6. The all-solid secondary battery of any one of claims 1 to 5, wherein the positive electrode layer comprises the positive electrode current collector and a first positive electrode active material layer on the one surface of the positive electrode current collector and a second positive electrode active material layer on a surface opposite the one surface of the positive electrode current collector,
the solid electrolyte layer comprises a first solid electrolyte layer and a second solid electrolyte layer which are in contact with the first positive electrode active material layer and the second positive electrode active material layer, respectively,
the negative electrode layer comprises a first negative electrode layer and a second negative electrode layer which are in contact with the first solid electrolyte layer and the second solid electrolyte layer, respectively, and
the first inactive member is between the first solid electrolyte layer and the second solid electrolyte layer and is around a side surface of the positive electrode layer.

7. The all-solid secondary battery of any one of claims 1 to 6, wherein the first inactive member comprises a flame-retardant inactive member, and the flame-retardant inactive member comprises a matrix and a filler;
optionally wherein the matrix comprises a substrate and a reinforcement material,
the substrate comprises a first fibrous material,
the first fibrous material is an insulator,
the first fibrous material comprises at least one selected from a pulp fiber, an polymer fiber that is an insulator, and an ion-conductive polymer fiber,
the reinforcement material comprises a second fibrous material,
the second fibrous material is a flame-retardant,
the second fibrous material comprises at least one selected from a glass fiber and a ceramic fiber,
the filler is a moisture getter and comprises metal hydroxide, and
the metal hydroxide comprises at least one selected from Mg(OH)₂, Fe(OH)₃, Sb(OH)₃, Sn(OH)₄, TI(OH)₃, Zr(OH)₄, and AI(OH).

8. The all-solid secondary battery of any one of claims 1 to 7, wherein the first negative electrode active material layer comprises a negative electrode active material and a binder, and
the negative electrode active material has a particle form and particles of the particle form have an average particle diameter of about 4 µm or less;
optionally wherein the negative electrode active material comprises at least one selected from a carbon-based negative electrode active material and a metal or metalloid negative electrode active material,
the carbon-based negative electrode active material comprises amorphous carbon, crystalline carbon, porous carbon, or a combination thereof, and
the metal or metalloid negative electrode active material comprises gold (Au), platinum (Pt), palladium (Pd), silicon (Si), silver (Ag), aluminum (Al), bismuth (Bi), tin (Sn), zinc (Zn), or a combination thereof; and/or
optionally wherein the negative electrode active material comprises a mixture of first particles of amorphous carbon and second particles of a metal or metalloid, and
an amount of the second particles is in a range of about 1 wt% to about 60 wt% with respect to a total weight of the mixture.

9. The all-solid secondary battery of any one of claims 1 to 8, wherein the first negative electrode active material layer further comprises a solid electrolyte.

10. The all-solid secondary battery of any one of claims 1 to 9, wherein the negative electrode active material comprises a carbon-based support and a metal-based negative electrode active material supported on the carbon-based support,
wherein the metal-based negative electrode active material comprises a metal, a metal oxide, a composite of a metal and a metal oxide, or a combination thereof,
the metal-based negative electrode active material is in a form of particles, and the particles have a particle diameter of about 1 nm to about 200 nm,
the carbon-based support has a particle form, and the carbon-based support has a particle diameter of about 10 nm to about 2 µm, and
the all-solid secondary battery further comprises a second negative electrode active material layer which, after the all-solid secondary battery is charged, is between the negative electrode current collector and the first negative electrode active material layer, wherein the second negative electrode active material layer is a metal layer, and the metal layer comprises lithium or a lithium alloy.

11. The all-solid secondary battery of any one of claims 1 to 10, further comprising a second inactive member on a surface opposite the one surface of the negative electrode current collector,
wherein the second inactive member comprises a conductive flame-retardant inactive member;
optionally wherein
a Young's modulus of the second inactive member is less than a Young's modulus of the negative electrode current collector,
the Young's modulus of the second inactive member is about 100 MPa or less,
a thickness of the second inactive member is greater than a thickness of the first negative electrode active material layer, and
the thickness of the first negative electrode active material layer is about 50% or less of the thickness of the second inactive member.

12. The all-solid secondary battery of any one of claims 1 to 11, wherein a volumetric expansion ratio of the all-solid secondary battery after charging is about 15% or less, and
an energy density of the all-solid secondary battery is in a range of about 500 Wh/L to about 900 Wh/L.

13. The all-solid secondary battery of any one of claims 1 to 12, wherein the solid electrolyte layer comprises an electrolyte,
the electrolyte comprises a solid electrolyte, a gel electrolyte or a combination thereof,
the solid electrolyte comprises a sulfide-based solid electrolyte, an oxide-based solid electrolyte, a polymer solid electrolyte, or a combination thereof,
the gel electrolyte comprises a polymer gel electrolyte, and
the solid electrolyte layer is impermeable to lithium polysulfide.

14. The all-solid secondary battery of any one of claims 1 to 13, wherein the electrolyte comprises the sulfide-based solid electrolyte and the sulfide-based solid electrolyte is at least one selected from Li₂S-P₂S₅, Li₂S-P₂S₅-LiX (wherein X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-Lil, Li₂S-B₂S₃, Li₂S-P₂S₅-ZₘSₙ (wherein m and n are positive numbers and Z is at least one selected from Ge, Zn, and Ga), Li₂S-GeS₂, Li₂S-SiS₂-Li₃PO₄, Li₂S-SiS₂-LiₚMO_{q} (wherein p and q are positive numbers and M is at least one selected from P, Si, Ge, B, Al, Ga, and In), Li₇₋ₓPS₆₋ₓClₓ (wherein 0≤x≤2), Li₇₋ₓPS₆₋ₓBrₓ (wherein 0≤x≤2), and Li₇₋ₓPS₆₋ₓIₓ (wherein 0≤x≤2), and
the sulfide-based solid electrolyte is an argyrodite-type solid electrolyte comprising at least one selected from Li₆PS₅Cl, Li₆PS₅Br, and Li₆PS₅I, and
a density of the argyrodite-type solid electrolyte is in a range of about 1.5 g/cc to about 2.0 g/cc.

15. The all-solid secondary battery of any one of claims 1 to 14, wherein at least one of the positive electrode current collector or the negative electrode current collector comprises a base film and a metal layer on one surface or both surfaces of the base film,
the base film comprises a polymer, the polymer comprising polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.
